# EUROPEAN PATENT APPLICATION

(11) **EP 4 730 308 A1**
(43) Date of publication of application: **22.04.2026**
(21) Application number: 25803881.9
(22) Date of filing: 21.03.2025
(51) Int. Cl.: G09G 3/20, G09G 3/3208, G09G 5/10, G06T 5/73

(54) **ELECTRONIC DEVICE CAPABLE OF CHANGING VIEWING ANGLE OF PARTIAL AREA OF DISPLAY PANEL**

(30) Priority: 14.05.2024 KR 20240063404; 08.07.2024 KR 20240089964
(71) Applicant: Samsung Electronics Co., Ltd., Suwon-si, Gyeonggi-do 16677 (KR)
(72) Inventor: LEE, Jaesung, Suwon-si Gyeonggi-do 16677 (KR); LEE, Hoomin, Suwon-si Gyeonggi-do 16677 (KR); JANG, Changjae, Suwon-si Gyeonggi-do 16677 (KR); KWON, Kyounghwan, Suwon-si Gyeonggi-do 16677 (KR); KIM, Suyeon, Suwon-si Gyeonggi-do 16677 (KR); BAE, Jongkon, Suwon-si Gyeonggi-do 16677 (KR); YANG, Byungduk, Suwon-si Gyeonggi-do 16677 (KR)
(74) Representative: Gulde & Partner
(86) International application number: PCT/KR2025/003680
(87) International publication number: WO 2025/239523

(57) **Abstract**

An electronic device is provided. The electronic device includes a display panel. The display panel is configured to adjust a viewing angle of an image displayed on the display panel. The electronic device includes display driver circuitry. The electronic device includes at least one processor including processing circuitry.

## Description

### [Technical Field]

The following descriptions relate to an electronic device changing a viewing angle of a partial area of a display panel.

### [Background Art]

An electronic device may be configured to display visual information through a display panel. For example, the visual information may be displayed through pixels in the display panel. For example, each of the pixels may include at least one first sub-pixel configured to emit light having a first color, at least one second sub-pixel configured to emit light having a second color, and at least one third sub-pixel configured to emit light having a third color.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may comprise a display panel. The display panel may be configured to adjust a viewing angle of an image displayed on the display panel. The electronic device may comprise display driver circuitry. The electronic device may comprise at least one processor comprising processing circuitry. The display driver circuitry may be configured to obtain, from the at least one processor, a composition list regarding layers included in an image to be displayed on the display panel. The display driver circuitry may be configured to receive, from the at least one processor, the image. The display driver circuitry may be configured to identify, using the composition list, applying a filter for user privacy to a second layer of the image positioned below a first layer of the image to partially overlap the first layer of the image, the first layer of the image being transparent or translucent. The display driver circuitry may be configured to, in accordance with the identification, based on performing a pixel processing with respect to pixels corresponding to the second layer of the image to apply the filter to the second layer of the image and also apply the filter to a portion of the first layer overlapping the second layer of the image, display, on the display panel, the image including the portion of the first layer having a viewing angle narrower than a viewing angle of a remaining portion of the first layer, and the second layer that has a viewing angle narrower than the viewing angle of the remaining portion of the first layer.

An electronic device is provided. The electronic device may comprise a display panel. The display panel may be configured to adjust a viewing angle of an image displayed on the display panel. The electronic device may comprise display driver circuitry. The electronic device may comprise at least one processor including processing circuitry. The display driver circuitry may be configured to obtain, from the at least one processor, a composition list regarding layers included in an image to be displayed on the display panel. The display driver circuitry may be configured to receive the image from the at least one processor. The display driver circuitry may be configured to identify, by using the composition list, applying a filter for user privacy to a second layer positioned below a first layer to partially overlap the first layer, the first layer being transparent or translucent. The display driver circuitry may be configured to in accordance with the identification, based on performing a pixel processing with respect to pixels corresponding to a portion of the first layer and pixels corresponding to the second layer to apply the filter to the second layer and also apply the filter to a portion of the first layer not overlapping the second layer, display, on the display panel, the image. A viewing angle of a first area of the display panel in which the first layer and the second layer overlap each other, a second area of the display panel corresponding to the portion of the first layer not overlapping the second layer, and a third area of the display panel corresponding to a portion of the second layer not overlapping the first area may be narrower than a viewing angle of a fourth area of the display panel different from the first area of the display panel, the second area of the display panel, and the third area of the display panel, while displaying the image.

An electronic device is provided. The electronic device may comprise a display panel. The display panel may be configured to adjust a viewing angle of an image displayed on the display panel. The electronic device may comprise display driver circuitry. The electronic device may comprise at least one processor including processing circuitry. The display driver circuitry may be configured to obtain, from the at least one processor, a composition list regarding layers included in an image to be displayed on the display panel. The display driver circuitry may be configured to receive the image from the at least one processor. The display driver circuitry may be configured to identify, by using the composition list, applying a filter for user privacy to a second layer positioned below a first layer to partially overlap the first layer, the first layer being transparent or translucent. The display driver circuitry may be configured to, in accordance with the identification, display the image, on the display panel, based on performing a pixel processing with respect to pixels corresponding to a portion of the second layer not overlapping the first layer to apply the filter to the portion of the second layer. A viewing angle of a first area of the display panel corresponding to the portion of the second layer not overlapping the first layer may be narrower than a viewing angle of a second area of the display panel corresponding to a remaining portion of the second layer overlapping the first layer and a third area of the display panel corresponding to the portion of the first layer not overlapping the second layer.

An electronic device is provided. The electronic device may comprise a display including a display panel comprising first pixels and second pixels, and display driver circuitry. The first pixels may be viewable based on a first viewing angle, and the second pixels may be viewable based on a second viewing angle narrower than the first viewing angle. The electronic device may comprise memory comprising one or more storage media. The electronic device may comprise at least one processor comprising processing circuitry. The memory may store instructions that cause the electronic device to obtain layer information associated with layers generated for an image to be displayed on the display panel. The memory may store instructions that cause the electronic device to perform a pixel processing for user privacy with respect to at least one of the layers based on the layer information. The memory may store instructions that cause the electronic device to, based on performing the pixel processing with respect to the at least one layer, display the image by at least partially using the other one or more among the plurality of pixels.

An electronic device is provided. The electronic device may comprise a display panel. The display panel may be configured to adjust a viewing angle of an image displayed on the display panel. The electronic device may comprise display driver circuitry. The electronic device may comprise memory comprising one or more storage media. The electronic device may comprise at least one processor comprising processing circuitry. The memory may store instructions that cause the electronic device to generate, by using the at least one processor, a composition list including first information indicating a position of each of layers generated for an image to be displayed on the display panel, second information indicating a stacking order of each of the layers, and third information indicating whether applying a pixel processing performed on sub-pixel basis for user privacy to each of the layers. The memory may store instructions that cause the electronic device to provide, by using the at least one processor, the composition list to the display driver circuitry. The memory may store instructions that cause the electronic device to transmit, to the display driver circuitry, data for the image generated by performing layer composition for the layers according to the first information and the second information in the composition list, by using the at least one processor. The memory may store instructions that cause the electronic device to identify, by using the display driver circuitry, the layers from the data. The memory may store instructions that cause the electronic device to, in accordance with the third information, identify, by using the display driver circuitry, at least one layer, from among the layers, applying the pixel processing. The memory may store instructions that cause the electronic device to display, by using the display driver circuitry, the image on the display panel, based on applying the pixel processing to the at least one layer.

An electronic device is provided. The electronic device may comprise a display panel. The display panel may be configured to adjust a viewing angle of an image displayed on the display panel. The electronic device may comprise display driver circuitry. The electronic device may comprise memory comprising one or more storage media. The electronic device may comprise a first processor including processing circuitry. The electronic device may comprise a second processor, comprising processing circuitry, positioned between the first processor and the display driver circuitry. The memory may store instructions that cause the electronic device to generate, by using the first processor, a composition list including first information indicating a position of each of layers generated for an image to be displayed on the display panel, second information indicating a stacking order of each of the layers, and third information indicating whether applying a pixel processing performed on sub-pixel basis for user privacy to each of the layers. The memory may store instructions that cause the electronic device to perform, by using the first processor, layer composition for the layers according to the first information and the second information in the composition list. The memory may store instructions that cause the electronic device to provide, by using the first processor, the composition list to the second processor. The memory may store instructions that cause the electronic device to identify, by using the second processor, at least one layer among the layers to which the pixel processing is applied according to the third information, and apply, by using the second processor, the pixel processing to the at least one layer, in order to generate data for the image. The memory may store instructions that cause the electronic device to display, by using the display driver circuitry, the image on the display panel, based on transmitting the data to the display driver circuitry by using the second processor.

### [Description of the Drawings]

FIG. 1 illustrates an example of a viewing angle of a second layer of an image different from a viewing angle of a first layer of an image.
FIG. 2 is a schematic view of an electronic device.
FIG. 3 illustrates an example configuration of a display panel of an electronic device.
FIG. 4 is a cross-sectional view of a display panel according to an example configuration of FIG. 3.
FIG. 5 illustrates another example configuration of a display panel of an electronic device.
FIG. 6 is a cross-sectional view of a display panel according to an example configuration of FIG. 5.
FIG. 7 illustrates an example of a pixel processing performed in a display processing unit (DPU) to apply a filter for user privacy to a layer of an image.
FIG. 8 illustrates an example of a pixel processing performed in display driver circuitry to apply a filter for user privacy to a layer of an image.
FIG. 9 illustrates an example of a pixel processing performed to apply a filter for user privacy to a layer in an image.
FIG. 10 illustrates an example of a pixel processing performed for applying a filter for user privacy to a first layer of the image with a first intensity and a filter for user privacy to a second layer of the image with a second intensity.
FIG. 11 illustrates an example of applying a filter for user privacy to at least one layer of the image having rounded corners.
FIG. 12 illustrates an example of applying a filter for user privacy for content in a layer of an image having rounded corners.
FIGS. 13 to 15 illustrate methods of processing a first layer of an image when applying a filter for user privacy to a second layer of the image positioned below the first layer of the image to partially overlap the first layer, the first layer of the image being transparent or transparent.
FIG. 16 illustrates an example of a filter for user privacy applied according to information of alpha channels for an image.
FIG. 17 is a block diagram of an electronic device in a network environment according to various embodiments.
FIG. 18 is a block diagram of a display module according to various embodiments.
FIG. 19 is a schematic diagram of an exemplary AI system.

### [Mode for Invention]

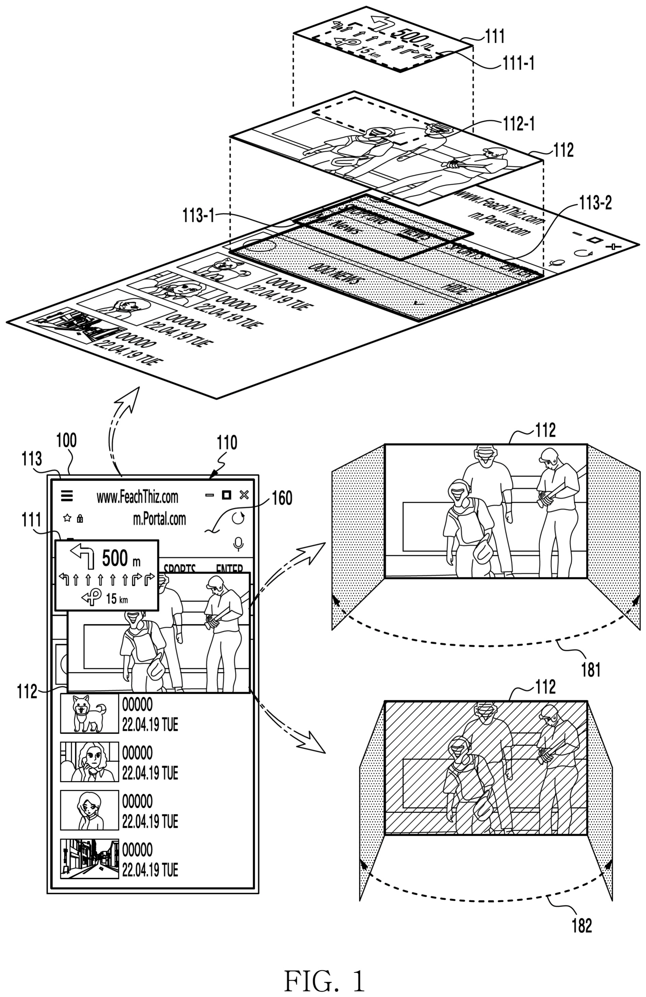

FIG. 1 illustrates an example of a viewing angle of a second layer of an image different from a viewing angle of a first layer of an image.

Referring to FIG. 1, an electronic device 100 may display an image 110 on a display panel 160. The image 110 may include a plurality of layers overlapping each other. For example, the image 110 may include a first layer 111, a second layer 112, and a third layer 113. The second layer 112 may be positioned below the first layer 111 to at least partially overlap the first layer 111. For example, a portion 112-1 of the second layer 112 positioned below the first layer 111 may overlap a portion 111-1 of the first layer 111. For example, the portion 111-1 of the first layer 111 positioned above the second layer 112 may overlap the portion 112-1 of the second layer 112. The third layer 113 may be positioned below the first layer 111 to overlap the first layer 111. The third layer 113 may be positioned below the second layer 112 to overlap the second layer 112. For example, a first portion 113-1 of the third layer 113 positioned below the first layer 111 (or the first layer 111 and the second layer 112) may overlap the first layer 111. For example, the first layer 111 positioned above the third layer 113 (or the second layer 112 and the third layer 113) may overlap the first portion 113-1 of the third layer 113. For example, a second portion 113-2 of the third layer 113 positioned below the second layer 112 (or the first layer 111 and the second layer 112) may overlap the second layer 112. For example, the second layer 112 positioned above the third layer 113 (or the second layer 112 positioned between the first layer 111 and the third layer 113) may overlap the second portion 113-2 of the third layer 113.

The electronic device 100 may provide a function (or feature) for user privacy with respect to a display on a display panel 160. For example, a filter for the user privacy may be applied to at least a portion of an image 110 displayed on the display panel 160 of the electronic device 100. The filter may be described as a function (or feature) of the electronic device 100 that reduces a viewing angle of the at least portion of the image 110 for the user privacy. For example, the filter may be described as a privacy filter. For example, the filter may be applied to one or more of layers of the image 110 displayed on the display panel 160. As a non-limiting example, the filter may be applied to a second layer 112, which is a layer among the first layer 111, the second layer 112, and the third layer 113 of the image 110. For example, a viewing angle 182 of the second layer 112 to which the filter is applied may be narrower than a viewing angle 181 of the second layer 112 to which the filter is not applied. For example, a field of illumination (FOI) of light emitted from pixels in the display panel 160 used to display the second layer 112 of the image 110 to which the filter is applied may be narrower than an FOI of light emitted from pixels in the display panel 160 used to display the second layer 112 of the image 110 in which the filter is not applied. For example, a field of illumination (FOI) of light emitted from pixels in the display panel 160 used to display the second layer 112 of the image 110 to which the filter is applied may be narrower than an FOI of light emitted from pixels in the display panel 160 used to display the first layer 111 and the third layer 113 of the image 110 to which the filter is not applied.

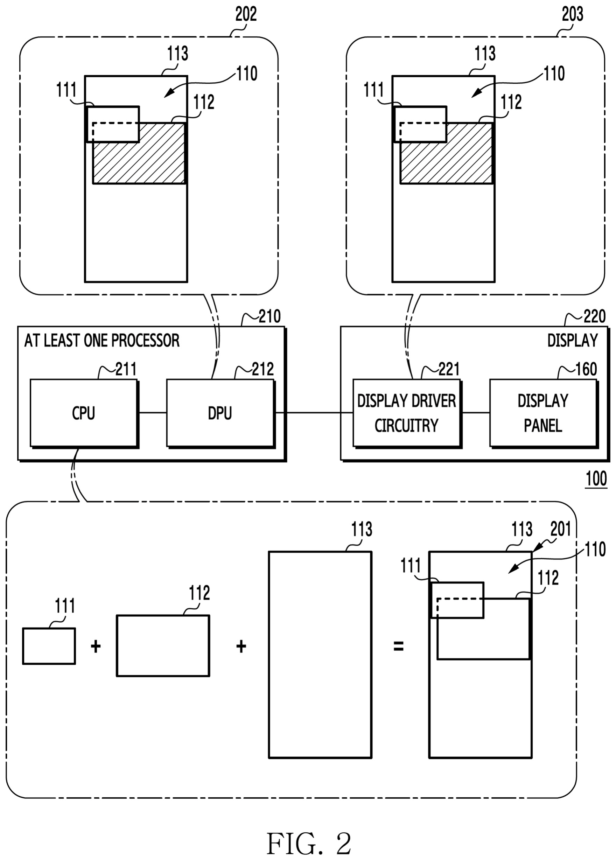

FIG. 2 is a schematic view of an electronic device.

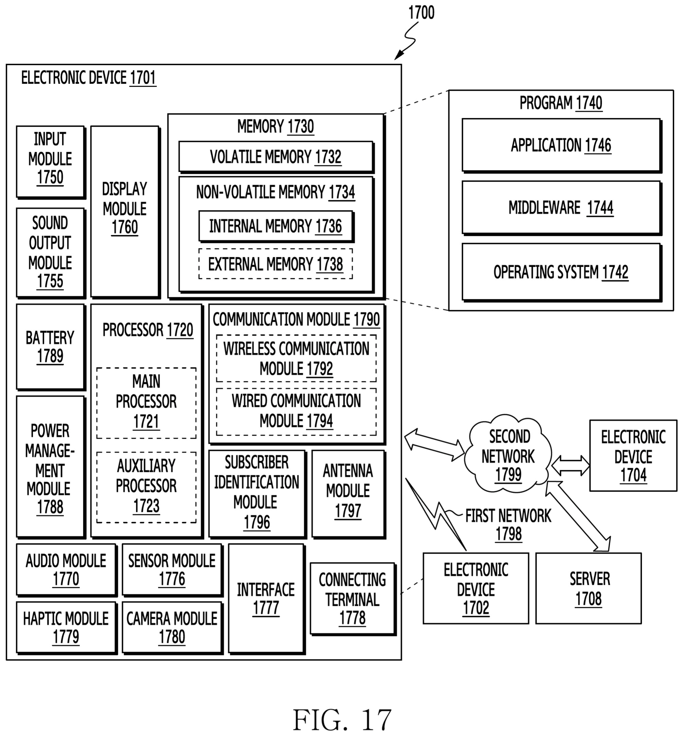

Referring to FIG. 2, an electronic device 100 may comprise at least one processor 210 comprising processing circuitry and a display 220. The electronic device 100 may include at least a portion of the electronic device 1701 of FIG. 17 or may correspond to at least a portion of the electronic device 1701 of FIG. 17.

The at least one processor 210 may include at least a portion of the processor 1720 of FIG. 17, or may correspond to at least a portion of the processor 1720 of FIG. 17. The at least one processor 210 may include a central processing unit (CPU) 211 (e.g., including processing circuitry) and a display processing unit (DPU) 212 (e.g., including processing circuitry). As a non-limiting example, the at least one processor 210 may further include a graphic processing unit (GPU) (e.g., including processing circuitry).

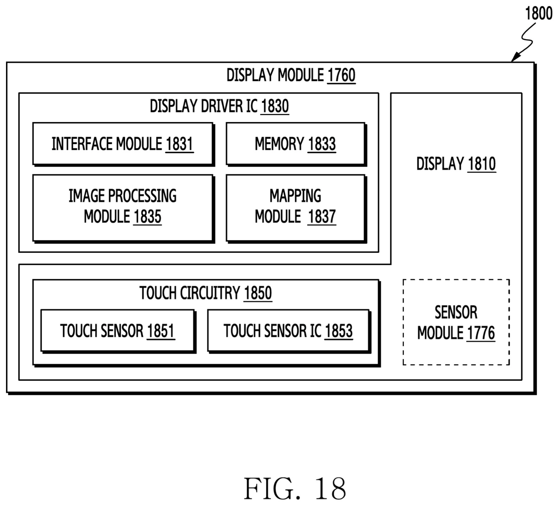

The display 220 may include at least a portion of the display module 1760 of FIG. 17, or may correspond to at least a portion of the display module 1760 of FIG. 17. The display 220 may include display driver circuitry (or display driver integrated circuitry) 221 and a display panel 160. The display driver circuitry 221 may include at least a portion of the display driver IC 1830 of FIG. 18, or may correspond to at least a portion of the display driver IC 1830 of FIG. 18. The display panel 160 may include at least a portion of the display 1810 of FIG. 18, or may correspond to at least a portion of the display 1810 of FIG. 18.

The display 220 may operate or be driven for a command mode, a video mode, a hybrid video mode of a mobile industry processor interface (MIPI) display serial interface (DSI), and/or an adaptive refresh panel (ARP).

The at least one processor 210 may generate or obtain data regarding an image to be displayed on the display panel 160, by executing instructions stored in memory (e.g., including one or more storage media) of the electronic device 100. The at least one processor 210 may transmit the data to the display driver circuitry 221. For example, a CPU 211 within the at least one processor 210 may generate layers including the first layer 111, the second layer 112, and the third layer 113. For example, the CPU 211 may determine an arrangement of the layers including the first layer 111, the second layer 112, and the third layer 113. For example, as in a state 201, the CPU 211 may determine to arrange the second layer 112 below the first layer 111 to partially overlap the first layer 111 in the image 110. For example, as in the state 201, the CPU 211 may determine to arrange the third layer 113 below the first layer 111 and the second layer 112 to partially overlap the first layer 111 and the second layer 112 in the image 110. For example, the CPU 211 may generate (or obtain) a composition list including information on the determined arrangement of the layers.

For example, the CPU 211 may provide the composition list to the DPU 212. For example, providing the composition list to the DPU 212 may include transmitting the generated composition list to the DPU 212. For example, providing the composition list to the DPU 212 may include transmitting information (e.g., layer information or at least one command corresponding to the composition list) generated using the composition list to the DPU 212. For example, in this document, providing the composition list to the DPU 212 may indicate not only providing the composition list itself (or without modification) to the DPU 212 but also providing the layer information (or the at least one command) obtained from the composition list to the DPU 212.

For example, the CPU 211 may provide the composition list to the display driver circuitry 221 through the DPU 212. For example, providing the composition list to the display driver circuitry 221 may include transmitting the generated composition list to the display driver circuitry 221 through the DPU 212. For example, providing the composition list to the display driver circuitry 221 through the DPU 212 may include transmitting information (e.g., the layer information or at least one command corresponding to the composition list) generated using the composition list to the display driver circuitry 221 through the DPU 212. For example, providing the composition list to the display driver circuitry 221 through the DPU 212 may include transmitting the composition list to the DPU 212, generating (or obtaining) at least one command corresponding to the composition list in the DPU 212, and transmitting the at least one command from the DPU 212 to the display driver circuitry 221. For example, in this document, providing the composition list to the display driver circuitry 221 may indicate not only providing the composition list itself (or without modification) to the display driver circuitry 221 but also providing the at least one command (or the layer information) obtained from the composition list to the display driver circuitry 221. As a non-limiting example, the layer information (or the at least one command) may include information on one or more layers to which the filter is to be applied and information on an intensity of the filter applied to the one or more layers. For example, the layer information (or the at least one command) may be obtained through one or more programs including instructions included in a kernel driver and/or a hardware abstraction layer (HAL) for the display 220. As a non-limiting example, the layer information (or the at least one command) may be used when circuitry that performs a pixel processing for the filter is configured to require only information on the one or more layers to which the filter is to be applied.

The composition list may be used to apply the filter to one or more of the layers. For example, the composition list may include not only the information on the determined arrangement but also information associated with the filter. For example, the composition list may include first information indicating a position of layers (e.g., including the first layer 111, the second layer 112, and the third layer 113) generated for an image (e.g., the image 110) to be displayed on the display panel 160, second information indicating a stacking order of each of the layers, and third information indicating whether applying the filter to each of the layers. As a non-limiting example, the first information may indicate a position of each of the layers adjusted by the at least one processor 210 (or the CPU 211) according to a difference between a resolution of the image (e.g., the image to be displayed on the display panel 160) rendered by the at least one processor 210 (or the CPU 211) and a resolution of the image displayed through the display panel 160. As a non-limiting example, adjusting the position of each of the layers may be executed through one or more programs including instructions included in a kernel driver and/or a hardware abstraction layer (HAL) for the display 220.

For example, the composition list may further include fourth information indicating an intensity of applying the filter to each of the layers. For example, the composition list may further include fifth information indicating transparency of each of the layers. For example, the composition list may further include sixth information indicating a radius of curvature of corners (or rounded corners) of each of the layers. For example, the composition list may be represented as shown in Table 1 below.

**[Table 1]**

| Layer Name | First information | Second information | Third information | Fourth information | Fifth information | Sixth information |
|---|---|---|---|---|---|---|
| First layer(111) | L1, T1, R1, B1 | S1 | 0 | 0 | A1 | R1 |
| Second layer (112) | L2, T2, R2, B2 | S2 | 1 | I | A2 | R2 |
| Third First layer (113) | L3, T3, R3, B3 | S3 | 0 | 0 | A3 | R3 |
| ... | ... | ... | ... | ... | ... | ... |

In Table 1, 'L1' and 'T1' of the first information defined for the first layer 111 indicate a start position (e.g., a top left corner point or an upper left corner point of the first layer 111) of the first layer 111, and 'R1' and 'B1' of the first information defined for the first layer 111 indicate a last position (e.g., a bottom right corner point or a lower right corner point of the first layer 111) of the first layer 111. In Table 1, 'L2' and 'T2' of the first information defined for the second layer 112 indicate a start position of the second layer 112, and 'R2' and 'B2' of the first information defined for the second layer 112 indicate a last position of the second layer 112. In Table 1, 'L3' and 'T3' of the first information defined for the third layer 113 indicate a start position of the third layer 113, and 'R3' and 'B3' of the first information defined for the third layer 113 indicate a last position of the third layer 113.

In Table 1, 'S1' of the second information defined for the first layer 111 indicates that the first layer 111 is disposed above the second layer 112 and the third layer 113. In Table 1, 'S2' of the second information defined for the second layer 112 indicates that the second layer 112 is disposed below the first layer 111 and disposed above the third layer 113. In Table 1, 'S3' of the second information defined for the third layer 113 indicates that the third layer 113 is disposed below the first layer 111 and the second layer 112.

In Table 1, '0' of the third information defined for the first layer 111 indicates that the filter is not applied to the first layer 111. In Table 1, '1' of the third information defined for the second layer 112 indicates that the filter is applied to the second layer 112. In Table 1, '0' of the third information defined for the third layer 113 indicates that the filter is not applied to the third layer 113.

In Table 1, '0' of the fourth information defined for the first layer 111 indicates an intensity of applying the filter to the first layer 111. Since the third information defined for the first layer 111 is '0', the fourth information defined for the first layer 111 may be '0'. In Table 1, 'I' of the fourth information defined for the second layer 112 indicates an intensity of applying the filter to the second layer 112. As a non-limiting example, 'I' of the fourth information defined for the second layer 112 may be 1 or more and 255 or less. In Table 1, '0' of the fourth information defined for the third layer 113 indicates an intensity of applying the filter to the third layer 113. Since the third information defined for the third layer 113 is '0', the fourth information defined for the third layer 113 may be '0'.

In Table 1, 'A1' of the fifth information defined for the first layer 111 indicates transparency (or alpha) of the first layer 111. As a non-limiting example, 'A1' may be 0 or more and 255 or less. In Table 1, 'A2' of the fifth information defined for the second layer 112 indicates transparency of the second layer 112. As a non-limiting example, 'A2' may be 0 or more and 255 or less. In Table 1, 'A3' of the fifth information defined for the third layer 113 indicates transparency of the third layer 113. As a non-limiting example, 'A3' may be 0 or more and 255 or less.

In Table 1, 'R1' of the sixth information defined for the first layer 111 indicates a radius of curvature of corners of the first layer 111. For example, when the first layer 111 is rectangular, R1 may be 0. For example, when the first layer 111 is a rounded rectangle, R1 may be greater than 0. In Table 1, 'R2' of the sixth information defined for the second layer 112 indicates a radius of curvature of corners of the second layer 112. For example, when the second layer 112 is rectangular, R2 may be 0. For example, when the second layer 112 is a rounded rectangle, R2 may be greater than 0. In Table 1, 'R3' of the sixth information defined for the third layer 113 indicates a radius of curvature of corners of the third layer 113. For example, when the third layer 113 is rectangular, R3 may be 0. For example, when the third layer 113 is a rounded rectangle, R3 may be greater than 0.

For example, transmitting the composition list (or the layer information) (or the at least one command) to the DPU 212 (or the display driver circuitry 221) may be synchronized with transmitting the data regarding the image to the DPU 212 (or the display driver circuitry 221).

For example, as in a state 202, the DPU 212 may perform a pixel processing with respect to pixels corresponding to one or more (e.g., the second layer 112) among the layers (e.g., the first layer 111, the second layer 112, and the third layer 113) of the image, in order to apply the filter to the one or more (e.g., the second layer 112) among the layers (e.g., the first layer 111, the second layer 112, and the third layer 113) by using the composition list. The pixel processing for user privacy may be performed on sub-pixel basis. For example, the pixel processing may be performed in the DPU 212, while the display 220 is operating for the video mode, the hybrid video mode (e.g., the hybrid video mode while disabling a graphic random access memory (GRAM) in the display driver circuitry 221 (not illustrated) (e.g., the memory 1833 of FIG. 18)), or the ARP. As a non-limiting example, performing the pixel processing in the DPU 212 may indicate determining a data voltage to be provided to each of sub-pixels in the display panel 160 corresponding to the one or more of the layers by using the display driver circuitry 221.

For example, as in a state 203, the display driver circuitry 221 may perform, by using the composition list, a pixel processing with respect to pixels corresponding to one or more (e.g., the second layer 112) of the layers (e.g., the first layer 111, the second layer 112, and the third layer 113) of the image, in order to apply the filter to the one or more (e.g., the second layer 112) of the layers (e.g., the first layer 111, the second layer 112, and the third layer 113). The pixel processing for user privacy may be performed on sub-pixel basis. For example, the pixel processing may be performed in the display driver circuitry 221 while the display 220 is operating for the command mode or the hybrid video mode (e.g., the hybrid video mode during which the graphic random access memory (GRAM) (not illustrated) (e.g., the memory 1833 of FIG. 18) in the display driver circuitry 221 is enabled).

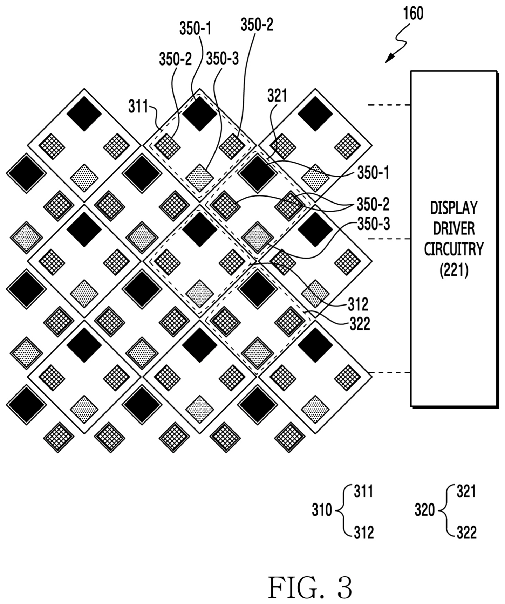

For example, the pixel processing may be described as performing control of narrowing (or reducing) a viewing angle of the one or more of the layers to which the filter is applied. For example, for the pixel processing, the display panel 160 may have a structure for the filter. The structure is described in more detail with reference to FIGS. 3 to 6.

FIG. 3 illustrates an example configuration of a display panel of an electronic device.

Referring to FIG. 3, the display panel 160 may include a plurality of pixels. Each of the plurality of pixels may include sub-pixels. The sub-pixels may include a first sub-pixel 350-1 configured to emit light of a first color (e.g., a red color), a second sub-pixel 350-2 configured to emit light of a second color (e.g., a green color), and a third sub-pixel 350-3 configured to emit light of a third color (e.g., a blue color). The sub-pixels may further include a fourth sub-pixel (not shown) configured to emit light of a fourth color (e.g., a white color).

An FOI of light emitted from one or more of the plurality of pixels may be narrower than an FOI of light emitted from other one or more of the plurality of pixels. For example, the one or more of the plurality of pixels may include a pixel 321 and a pixel 322. For example, the other one or more of the plurality of pixels may include a pixel 311 and a pixel 312.

For example, the one or more of the plurality of pixels may be positioned within (or inside) a first set 320 of areas in an active area (or display area) of the display panel 160, such as the pixel 321 and the pixel 322. For example, the other one or more of the plurality of pixels may be positioned within (or inside) a second set 310 of areas in the active area of the display panel 160, such as the pixel 311 and the pixel 312. As a non-limiting example, areas included in the first set 320 of areas and areas included in the second set 310 of areas may alternate with each other. As a non-limiting example, the areas included in the first set 320 of areas and the areas included in the second set 310 of areas may be included in the active area in an interleaved arrangement.

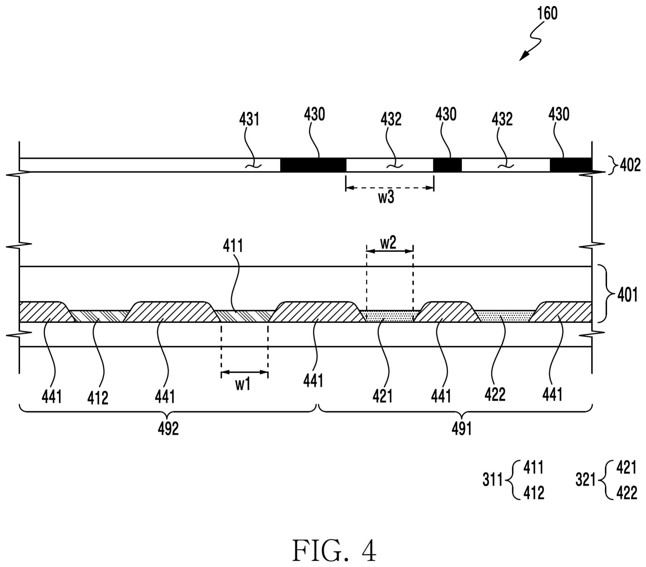

The display panel 160 may include an opaque member in another layer (e.g., another layer 402 of FIG. 4) of the display panel 160 disposed above a layer (e.g., a layer 401 of FIG. 4) of the display panel 160 including the plurality of pixels, in order to narrow (or reduce) an FOI of light emitted from the one or more of the plurality of pixels compared to an FOI of light emitted from the other one or more of the plurality of pixels. The opaque member in the other layer of the display panel 160 may be the structure for the filter. The opaque member in the other layer of the display panel 160 may be partially overlying the one or more of the plurality of pixels, and may not be overlying the other one or more of the plurality of pixels. The opaque member disposed in the other layer of the display panel 160 according to the example configuration of FIG. 3 is described in more detail with reference to FIG. 4.

FIG. 4 is a cross-sectional view of a display panel according to the example configuration of FIG. 3.

Referring to FIG. 4, the display panel 160 may include a layer 401 and another layer 402 disposed (or positioned) on the layer 401. The layer 401 of the display panel 160 may be described as an emission layer 401. The other layer 402 of the display panel 160 may be described as a masking layer 402 (or a mask layer 402).

The layer 401 of the display panel 160 may include a pixel 311 positioned in an area 492 included in a second set 310 of areas, and a pixel 321 positioned in an area 491 included in the first set 320 of areas. The pixel 311 may include a sub-pixel 411 and a sub-pixel 412. The pixel 321 may include a sub-pixel 421 and a sub-pixel 422.

The layer 401 of the display panel 160 may include a pixel definition layer (PDL) 441. The PDL 441 may define a periphery of the pixel 311 and a periphery of the pixel 321. The PDL 441 may define a periphery of the sub-pixel 411 in the pixel 311 and a periphery of the sub-pixel 412 in the pixel 311. The PDL 441 may define a periphery of the sub-pixel 421 in the pixel 321 and a periphery of the sub-pixel 422 in the pixel 321. For example, the PDL 441 may be disposed between the pixel 311 and the pixel 321, may be disposed between the sub-pixel 411 and the sub-pixel 412, and may be disposed between the sub-pixel 421 and the sub-pixel 422.

As a non-limiting example, a width w1 of the sub-pixel 411 defined by the PDL 441 may be equal to a width w2 of the sub-pixel 421 defined by the PDL 441. As a non-limiting example, the width w1 of the sub-pixel 411 defined by the PDL 441 may be wider than the width w2 of the sub-pixel 421 defined by the PDL 441.

The other layer 402 of the display panel 160 may include an opaque member 430 (or a black matrix 430). The opaque member 430 may be included in the other layer 402 of the display panel 160 for the filter. For example, the opaque member 430 may be partially overlying the pixel 321 and may not be overlying the pixel 311, in order to narrow an FOI of light emitted from the pixel 321 compared to an FOI of light emitted from the pixel 311. For example, the opaque member 430 may partially overlap the pixel 321 among the pixel 311 and the pixel 321. For example, the opaque member 430 may be disposed above (or over) a portion of the PDL 441, defining the pixel 321 and defining sub-pixels (e.g., the sub-pixel 421 and the sub-pixel 422) in the pixel 321, and may not be disposed above another portion of the PDL 441, defining the pixel 311 and defining sub-pixels (e.g., the sub-pixel 411 and the sub-pixel 412) in the pixel 311. For example, the opaque member 430 may include an opening 431 (or a first light transmittance portion 431 (or a first light transmittance area 431)) disposed over the pixel 311, and openings 432 (or second light transmittance portions 432 (or second light transmittance areas 432)) disposed over the pixel 321. For example, a size of the opening 431 may be larger than a size of each of the openings 432. For example, the sub-pixels in the pixel 311 may be positioned below the opening 431. For example, each of the sub-pixels in the pixel 321 may be respectively positioned below each of the openings 432.

As a non-limiting example, a width w3 of an opening of the openings 432 may be equal to a width w2 of the sub-pixel 421. As a non-limiting example, a width w3 of an opening of the openings 432 may be wider than a width w2 of the sub-pixel 421. As a non-limiting example, a width w3 of an opening of the openings 432 may be narrower than a width w2 of the sub-pixel 421.

As a non-limiting example, the display panel 160 may further include at least one layer disposed between the layer 401 and the other layer 402.

For example, the at least one layer may include a color filter layer. The color filter layer may include an opaque member including opaque portions positioned between the PDL 441 and the opaque member 430. For example, the opaque member included in the color filter layer of the display panel 160 may include an opening (or a light transmittance portion) corresponding to the opening 431 and openings (or light transmittance portions) respectively corresponding to the openings 432.

For example, the at least one layer may include a layer disposed on the color filter layer. The layer disposed on the color filter layer may include an opaque member including opaque portions positioned between the PDL 441 and the opaque member 430. For example, the opaque member included in the layer of the display panel 160 disposed on the color filter layer of the display panel 160 may include an opening (or a light transmittance portion) corresponding to the opening 431 and openings (or light transmittance portions) respectively corresponding to the openings 432.

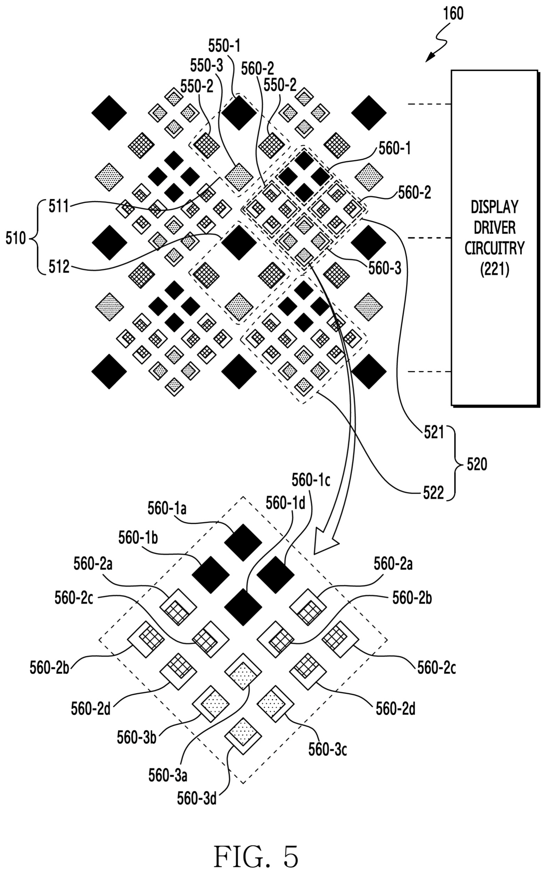

FIG. 5 illustrates another example configuration of a display panel of an electronic device.

Referring to FIG. 5, the display panel 160 may include a plurality of pixels. Each of the plurality of pixels may include first pixels 510 and second pixels 520. For example, the first pixels 510 may include a pixel 511 and a pixel 512. For example, the second pixels 520 may include a pixel 521 and a pixel 522. As a non-limiting example, the first pixels 510 and the second pixels 520 may alternate with each other. As a non-limiting example, the first pixels 510 and the second pixels 520 may be disposed in an interleaved arrangement.

The first pixels 510 may include sub-pixels. The sub-pixels may include a first sub-pixel 550-1 configured to emit light in a first color (e.g., a red color), a second sub-pixel 550-2 configured to emit light in a second color (e.g., a green color), and a third sub-pixel 550-3 configured to emit light in a third color (e.g., a blue color). The sub-pixels may further include a fourth sub-pixel (not illustrated) configured to emit light in a fourth color (e.g., a white color).

The second pixels 520 may include sub-pixels. The sub-pixels may include a first sub-pixel 560-1 configured to emit light in a first color (e.g., a red color), a second sub-pixel 560-2 configured to emit light in a second color (e.g., a green color), and a third sub-pixel 560-3 configured to emit light in a third color (e.g., a blue color). The sub-pixels may further include a fourth sub-pixel (not illustrated) configured to emit light in a fourth color (e.g., a white color).

Each of the sub-pixels in each of the second pixels 520 may include portions spaced apart from each other. For example, the first sub-pixel 560-1 may include a first portion 560-1a of the first sub-pixel 560-1, a second portion 560-1b of the first sub-pixel 560-1, a third portion 560-1c of the first sub-pixel 560-1, and a fourth portion 560-1d of the first sub-pixel 560-1. The first portion 560-1a of the first sub-pixel 560-1, the second portion 560-1b of the first sub-pixel 560-1, the third portion 560-1c of the first sub-pixel 560-1, and the fourth portion 560-1d of the first sub-pixel 560-1 may be spaced apart from each other. The first portion 560-1a of the first sub-pixel 560-1, the second portion 560-1b of the first sub-pixel 560-1, the third portion 560-1c of the first sub-pixel 560-1, and the fourth portion 560-1d of the first sub-pixel 560-1 may be described as micro-pixels of the first sub-pixel 560-1. For example, the second sub-pixel 560-2 may include a first portion 560-2a of the second sub-pixel 560-2, a second portion 560-2b of the second sub-pixel 560-2, a third portion 560-2c of the second sub-pixel 560-2, and a fourth portion 560-2d of the second sub-pixel 560-2. The first portion 560-2a of the second sub-pixel 560-2, the second portion 560-2b of the second sub-pixel 560-2, the third portion 560-2c of the second sub-pixel 560-2, and the fourth portion 560-2d of the second sub-pixel 560-2 may be spaced apart from each other. For example, the first portion 560-2a of the second sub-pixel 560-2, the second portion 560-2b of the second sub-pixel 560-2, the third portion 560-2c of the second sub-pixel 560-2, and the fourth portion 560-2d of the second sub-pixel 560-2 may be described as micro-pixels of the second sub-pixel 560-2. For example, the third sub-pixel 560-3 may include a first portion 560-3a of the third sub-pixel 560-3, a second portion 560-3b of the third sub-pixel 560-3, a third portion 560-3c of the third sub-pixel 560-3, and a fourth portion 560-3d of the third sub-pixel 560-3. The first portion 560-3a of the third sub-pixel 560-3, the second portion 560-3b of the third sub-pixel 560-3, the third portion 560-3c of the third sub-pixel 560-3, and the fourth portion 560-3d of the third sub-pixel 560-3 may be spaced apart from each other. For example, the first portion 560-3a of the third sub-pixel 560-3, the second portion 560-3b of the third sub-pixel 560-3, the third portion 560-3c of the third sub-pixel 560-3, and the fourth portion 560-3d of the third sub-pixel 560-3 may be described as micro-pixels of the third sub-pixel 560-3.

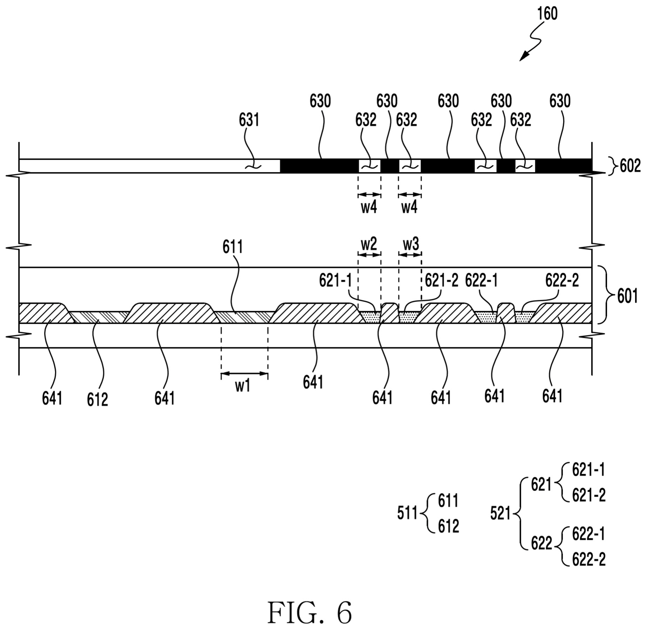

For example, an FOI of light emitted from the second pixels 520 may be wider than an FOI of light emitted from the first pixels 510. For example, in order to narrow (or reduce) the FOI of light emitted from the second pixels 520 compared to the FOI of light emitted from the first pixels 510, a layer of the display panel 160 including the plurality of pixels may include a PDL further defining the micro-pixels of the first sub-pixel 560-1, the micro-pixels of the second sub-pixel 560-2, and the micro-pixels of the third sub-pixel 560-3. For example, in order to narrow (or reduce) the FOI of light emitted from the second pixels 520 compared to the FOI of light emitted from the first pixels 510, another layer (e.g., another layer 602 of FIG. 6) of the display panel 160 disposed on the layer (e.g., the layer 601 of FIG. 6) of the display panel 160 including the plurality of pixels may include an opaque member. The opaque member in the other layer of the display panel 160 may be partially overlying the one or more of the plurality of pixels and may not be overlying the other one or more of the plurality of pixels. The PDL in the layer of the display panel 160 and the opaque member in the other layer of the display panel 160 may be the structure for the filter. The opaque member disposed in the other layer of the display panel 160 according to the example configuration of FIG. 5 is described in more detail with reference to FIG. 6.

FIG. 6 is a cross-sectional view of a display panel according to the example configuration of FIG. 5.

Referring to FIG. 6, the display panel 160 may include a layer 601 and another layer 602 disposed (or positioned) on the layer 601. The layer 601 of the display panel 160 may be described as a light emission layer 601. The other layer 602 of the display panel 160 may be described as a masking layer 602 (or a mask layer 602).

The layer 601 of the display panel 160 may include first pixels 510 and second pixels 520. The first pixels 510 may include a pixel 511. The pixel 511 may include a sub-pixel 611 and a sub-pixel 612. The second pixels 520 may include a pixel 521. The pixel 521 may include a sub-pixel 621 and a sub-pixel 622. The sub-pixel 621 may include a first portion 621-1 of the sub-pixel 621 and a second portion 621-2 of the sub-pixel 621. The sub-pixel 622 may include a first portion 622-1 of the sub-pixel 622 and a second portion 622-2 of the sub-pixel 622.

The layer 601 of the display panel 160 may include a pixel definition layer (PDL) 641. The PDL 641 may define a periphery of the pixel 511 and a periphery of the pixel 521. The PDL 641 may define a periphery of the sub-pixel 611 in the pixel 511 and a periphery of the sub-pixel 612 in the pixel 511. The PDL 641 may define a periphery of the sub-pixel 621 in the pixel 521 and a periphery of the sub-pixel 622 in the pixel 521. The PDL 641 may further define a periphery of the first portion 621-1 of the sub-pixel 621 and a periphery of the second portion 621-2 of the sub-pixel 621, relative to the PDL 441 (e.g., the PDL 441 of FIG. 4). The PDL 641 may further define a periphery of the first portion 622-1 of the sub-pixel 622 and a periphery of the second portion 622-2 of the sub-pixel 622, relative to the PDL 441 (e.g., the PDL 441 of FIG. 4). For example, the PDL 641 may be disposed between the pixel 511 and the pixel 521, may be disposed between the sub-pixel 611 and the sub-pixel 612, may be disposed between the sub-pixel 621 and the sub-pixel 622, may be disposed between the first portion 621-1 of the sub-pixel 621 and the second portion 621-2 of the sub-pixel 621, and may be disposed between the first portion 622-1 of the sub-pixel 622 and the second portion 622-2 of the sub-pixel 622.

As a non-limiting example, a width w1 of the sub-pixel 611 defined by the PDL 641 may be wider than a width w2 of the first portion 621-1 of the sub-pixel 621 defined by the PDL 641 and a width w3 of the second portion 621-2 of the sub-pixel 621 defined by the PDL 641. For example, a portion of the PDL 641 may be arranged with respect to the pixel 521 for the filter.

The other layer 602 of the display panel 160 may include an opaque member 630 (or a black matrix 630). The opaque member 630 may be included in the other layer 602 of the display panel 160 for the filter. For example, the opaque member 630 may be partially overlying the pixel 521 and may not be overlying the pixel 511, in order to narrow an FOI of light emitted from the pixel 521 compared to an FOI of light emitted from the pixel 511. For example, the opaque member 630 may partially overlap the pixel 521 among the pixel 511 and the pixel 521. For example, the opaque member 630 may be disposed above (or over) a portion of the PDL 641 defining the pixel 521 and defining sub-pixels (e.g., the sub-pixel 621 and the sub-pixel 622) in the pixel 521, and may not be disposed above (or over) another portion of the PDL 641 defining the pixel 511 and defining sub-pixels (e.g., the sub-pixel 611 and the sub-pixel 612) in the pixel 511. For example, the opaque member 630 may be further disposed above a portion of the PDL 641 defining the first portion 621-1 of the sub-pixel 621 and the second portion 621-2 of the sub-pixel 621, and a portion of the PDL 641 defining the first portion 622-1 of the sub-pixel 622 and the second portion 622-2 of the sub-pixel 622, relative to the opaque member 430 (e.g., the opaque member 430 of FIG. 4).

The opaque member 630 may include an opening 631 disposed above the pixel 611 and openings 632 disposed above the pixel 621. For example, a size of the opening 631 may be larger than a size of each of the openings 632.

As a non-limiting example, a width w4 of an opening of the openings 632 may be equal to a width w2 of the first portion 621-1 of the sub-pixel 621 (or a width w3 of the second portion 621-2 of the sub-pixel 621). As a non-limiting example, a width w4 of an opening of the openings 632 may be wider than a width w2 of the first portion 621-1 of the sub-pixel 621 (or a width w3 of the second portion 621-2 of the sub-pixel 621). As a non-limiting example, a width w4 of an opening of the openings 632 may be narrower than a width w2 of the first portion 621-1 of the sub-pixel 621 (or a width w3 of the second portion 621-2 of the sub-pixel 621).

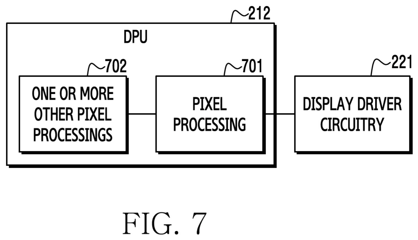

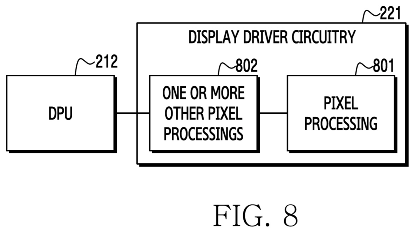

Referring back to FIG. 2, since the pixel processing for applying the filter is performed on a sub-pixel basis, performing the pixel processing on a pipeline for displaying the image (e.g., the image 110) may be after performing one or more other pixel processings on the pipeline. For example, the one or more other pixel processings may indicate a processing on the pipeline affecting the filter. For example, the one or more other pixel processings may be described as a processing on the pipeline of adjusting a data voltage provided (or to be provided) to at least one other sub-pixel in the display panel 160 adjacent to the sub-pixel in the display panel 160 in association with adjusting a data voltage provided to a sub-pixel in the display panel 160. For example, the one or more other pixel processings may be described as a processing on the pipeline of adjusting a data voltage provided to the at least one other sub-pixel (e.g., adjacent to the sub-pixel in the display panel 160) in the display panel 160, in accordance with adjusting a data voltage provided to the sub-pixel in the display panel 160. The one or more other pixel processings may indicate a processing on the pipeline of adjusting a data voltage to be provided to one or more second sub-pixels peripheral to a first sub-pixel, in accordance with adjusting a data voltage to be provided to the first sub-pixel. The one or more other pixel processings may be different from a processing on the pipeline of maintaining a data voltage to be provided to the one or more second sub-pixels peripheral to the first sub-pixel, independently of adjusting the data voltage to be provided to the first sub-pixel. The pixel processing for the filter, which is performed after performing the one or more other pixel processings, is described in more detail with reference to FIGS. 7 and 8.

FIG. 7 illustrates an example of a pixel processing performed in a display processing unit (DPU) to apply a filter for user privacy to a layer of an image.

Referring to FIG. 7, a pixel processing 701 for applying the filter for user privacy to one or more (e.g., the second layer 112) of layers (e.g., the first layer 111, the second layer 112, and the third layer 113) of an image (e.g., the image 110) may be performed in the DPU 212. For example, the pixel processing 701 may be performed in the DPU 212 with respect to pixels of the display panel 160 corresponding to the one or more (e.g., the second layer 112) of the layers in the image. For example, the pixel processing 701 may be performed in the DPU 212 after one or more other pixel processings 702 are performed in the DPU 212. As a non-limiting example, since a portion of the filter applied to the one or more (e.g., the second layer 112) of the layers (e.g., the first layer 111, the second layer 112, and the third layer 113) according to the pixel processing 701 performed before performing the one or more other pixel processings 702 may be released according to the one or more other pixel processings 702 performed after the pixel processing 701, the DPU 212 may perform the pixel processing 701 after performing the one or more other pixel processings 702. For example, the one or more other pixel processings 702 may include performing an upscaling with respect to the image (e.g., the image 110), performing an edge sharpening of at least one visual object included in the image, performing a blur processing with respect to at least a portion of the image, performing a high dynamic range (HDR) processing with respect to at least a portion of the image, performing a temporal dithering with respect to at least a portion of the image, performing a spatial dithering with respect to at least a portion of the image, performing a compensating of gradation with respect to the image, and/or performing a compensating of color temperature with respect to the image.

For example, the DPU 212 may, after performing the one or more other pixel processings 702 with respect to the image (e.g., the image 110), perform the pixel processing 701 with respect to pixels corresponding to the one or more (e.g., the second layer 112) of the layers of the image to apply the filter to the one or more of the layers of the image.

For example, the pixel processing 701 may be performed by using the composition list (or the layer information) (or the at least one command) obtained from the CPU 211. For example, the DPU 212 may identify, in accordance with the third information (e.g., the third information of Table 1) in the composition list, one or more layers (e.g., the second layer 112), to which the pixel processing 701 is applied, among the layers of the image, and apply the filter to the one or more layers by performing the pixel processing 701 with respect to pixels corresponding to the one or more layers.

Although not illustrated in FIG. 7, the DPU 212 may transmit, to the display driver circuitry 221, data for the image (e.g., the image 110) to which the filter is applied to the one or more layers, after the pixel processing 701. For example, the DPU 212 may compress the image before transmitting the data for the image, and transmit, to the display driver circuitry 221, the compressed image as the data. For example, compressing the image may be performed after performing the pixel processing 701.

Although not illustrated in FIG. 7, the display driver circuitry 221 may receive the data from the DPU 212. For example, the display driver circuitry 221 may display the image on the display panel 160, by using the data. For example, the display driver circuitry 221 may obtain the image by decompressing the data, and may display the image on the display panel 160. A viewing angle of the one or more layers (e.g., the second layer 112) among the layers in the image (e.g., the image 110) displayed on the display panel 160 may be narrower than a viewing angle of one or more other layers (e.g., the first layer 111 and the third layer 113) among the layers in the image displayed on the display panel 160.

FIG. 8 illustrates an example of a pixel processing performed in display driver circuitry to apply a filter for user privacy to a layer of an image.

Referring to FIG. 8, a pixel processing 801 for applying the filter for user privacy to one or more (e.g., the second layer 112) of layers (e.g., the first layer 111, the second layer 112, and the third layer 113) in the image (e.g., the image 110) may be performed in the display driver circuitry 221. For example, the pixel processing 801 may be performed in the display driver circuitry 221 with respect to pixels of the display panel 160 corresponding to the one or more (e.g., the second layer 112) of the layers in the image. For example, the pixel processing 801 may be performed in the display driver circuitry 221 after one or more other pixel processings 802 are performed in the display driver circuitry 221. As a non-limiting example, since a portion of the filter applied to the one or more (e.g., the second layer 112) of the layers (e.g., the first layer 111, the second layer 112, and the third layer 113) according to the pixel processing 801 performed before performing the one or more other pixel processings 802 may be released according to the one or more other pixel processings 802 performed after the pixel processing 801, the display driver circuitry 221 may perform the pixel processing 801 after performing the one or more other pixel processings 802. For example, the one or more other pixel processings 802 may include performing an upscaling with respect to the image (e.g., the image 110), performing an edge sharpening of at least one visual object included in the image, performing a blur processing with respect to at least a portion of the image, performing a high dynamic range (HDR) processing with respect to at least a portion of the image, performing a temporal dithering with respect to at least a portion of the image, performing a spatial dithering with respect to at least a portion of the image, performing a compensating of gradation with respect to the image, and/or performing a compensating of color temperature with respect to the image.

For example, the display driver circuitry 221 may receive, from the DPU 212, the data for the image, obtain the image by decompressing the data, and perform one or more other pixel processings 802 with respect to the image (e.g., the image 110). For example, the display driver circuitry 221 may, after performing the one or more other pixel processings 802 with respect to the image (e.g., the image 110), perform the pixel processing 801 with respect to pixels corresponding to one or more (e.g., the second layer 112) of the layers of the image to apply the filter to the one or more of the layers of the image.

For example, the pixel processing 801 may be performed by using the composition list (or the at least one command) (or the layer information) obtained from the CPU 211 (or the at least one processor 210). For example, the display driver circuitry 221 may identify, in accordance with the third information (e.g., the third information of Table 1) in the composition list, one or more layers (e.g., the second layer 112), to which the pixel processing 801 is applied, among the layers of the image, and may apply the filter to the one or more layers by performing the pixel processing 801 with respect to pixels corresponding to the one or more layers.

Although not illustrated in FIG. 8, the display driver circuitry 221 may, after performing the one or more other pixel processings 802 and the pixel processing 801, further perform another pixel processing with respect to a display of the image (e.g., the image 110). For example, each of sub-pixels in the display panel 160 may include an organic light emitting diode (OLED). For example, the pixel processing further performed by the display driver circuitry 221 may include adjusting a data voltage that is to be provided (or is provided) to a sub-pixel (e.g., a sub-pixel requiring a burn-in compensation) including the OLED for a burn-in compensation of the OLED.

Although not illustrated in FIG. 8, the display driver circuitry 221 may display the image (e.g., the image 110) on the display panel 160. For example, a viewing angle of one or more layers (e.g., the second layer 112) among the layers in the image (e.g., the image 110) displayed on the display panel 160 may be narrower than a viewing angle of one or more other layers (e.g., the first layer 111 and the third layer 113) among the layers in the image displayed on the display panel 160.

Referring back to FIG. 2, as a non-limiting example, when the filter is not applied to all of layers of an image to be displayed on the display panel 160, the CPU 211 may refrain from providing the composition list to the DPU 212 or the display driver circuitry 221 (or to the display driver circuitry 221 through the DPU 212). For example, when the filter is not applied to all of the layers of the image, the CPU 211 may refrain from providing the composition list, and may transmit, to the DPU 212 (or to the display driver circuitry 221 through the DPU 212), a signal indicating disabling of applying the filter.

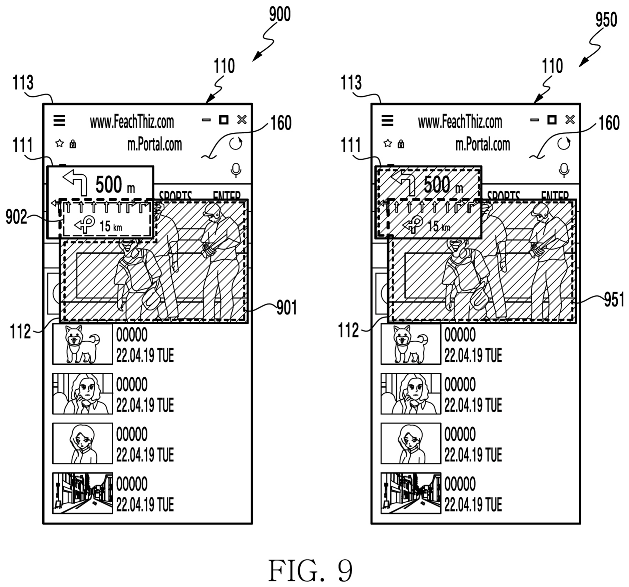

For example, the DPU 212 (or the display driver circuitry 221) may identify, by using the composition list obtained from the CPU 211, applying the filter to a second layer (e.g., the second layer 112) of the image (e.g., the image 110) to be displayed on the display panel 160, which is positioned below a first layer (e.g., the first layer 111) of the image, to partially overlap the first layer of the image. For example, the DPU 212 (or the display driver circuitry 221) may identify, by using the composition list obtained from the CPU 211, applying the filter to a first layer (e.g., the first layer 111) of the image (e.g., the image 110) to be displayed on the display panel 160, and to a second layer (e.g., the second layer 112) of the image, which is positioned below the first layer of the image to partially overlap the first layer of the image. The pixel processing performed to apply the filter to the second layer of the image, and the pixel processing performed to apply the filter to the first layer and the second layer of the image are described in more detail with reference to FIG. 9.

FIG. 9 illustrates an example of a pixel processing performed to apply a filter for user privacy to a layer in an image.

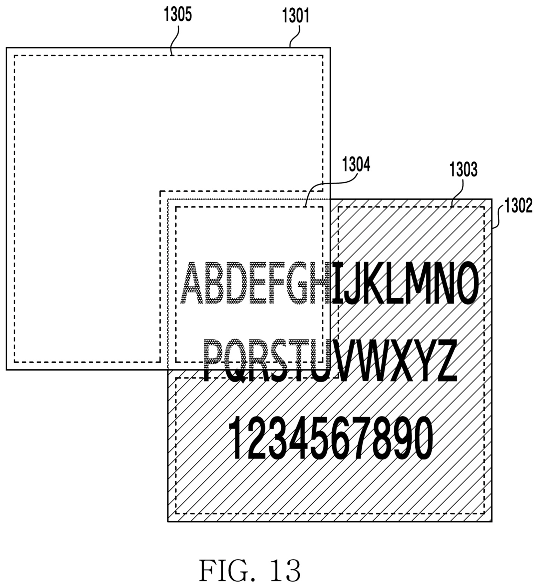

Referring to FIG. 9, the DPU 212 (or the display driver circuitry 221) may identify, by using the composition list obtained from the CPU 211, applying the filter to the second layer 112 of the image 110, which is positioned below the first layer 111 of the image 110, in order to partially overlap the first layer 111 of the image 110 to be displayed on the display panel 160. For example, the DPU 212 (or the display driver circuitry 221) may identify applying the filter to the second layer 112 of the image 110 positioned below the first layer 111 of the image 110 to partially overlap the first layer 111 of the image 110, based on identifying the second layer 112 of the image 110 positioned below the first layer 111 of the image 110 to partially overlap the first layer 111 of the image 110 in accordance with the first information (e.g., the first information of Table 1) and the second information (e.g., the second information of Table 1) in the composition list, and identifying applying the filter to the second layer 112 of the image 110 in accordance with the third information (e.g., the third information of Table 1) in the composition list. As a non-limiting example, the composition list may further include the fifth information (e.g., the fifth information of Table 1) indicating that the first layer 111 of the image 110 and the second layer 112 of the image 110 are opaque. The description associated with the fifth information is exemplified in more detail with reference to FIGS. 13 to 16.

The DPU 212 (or the display driver circuitry 221) may identify, in accordance with the identification, pixels (e.g., pixels positioned in an area 901) corresponding to a portion of the second layer 112 of the image 110 not overlapping the first layer 111 of the image 110, and may perform a pixel processing (e.g., the pixel processing 701 or the pixel processing 801) with respect to the identified pixels corresponding to the portion of the second layer 112 of the image 110 to apply the filter to the second layer 112 of the image 110, which is positioned below the first layer 111 of the image 110 to partially overlap the first layer 111 of the image 110. For example, the image 110 may be displayed on the display panel 160 according to the pixel processing, as a state 900. For example, in the state 900, a viewing angle of the portion (e.g., corresponding to the area 901) of the second layer 112 of the image 110 may be narrower than a viewing angle of the first layer 111 of the image 110. For example, in the state 900, a viewing angle of the portion (e.g., corresponding to the area 901) of the second layer 112 of the image 110 may be narrower than a viewing angle of a portion of a third layer 113 of the image 110 not overlapping the first layer 111 of the image 110 and the second layer 112 of the image 110. For example, since another portion (e.g., corresponding to an area 902) of the second layer 112 of the image 110 is positioned below the first layer 111 of the image 110, which is opaque, the DPU 212 (or the display driver circuitry 221) may, as in the state 900, refrain from performing the pixel processing with respect to pixels corresponding to the other portion (e.g., corresponding to the area 902) of the second layer 112 of the image 110 to apply the filter to the other portion (e.g., corresponding to the area 902) of the second layer 112 of the image 110.

The DPU 212 (or the display driver circuitry 221) may identify, by using the composition list obtained from the CPU 211, applying the filter to the first layer 111 of the image 110 to be displayed on the display panel 160, and to the second layer 112 of the image 110 positioned below the first layer 111 of the image 110 to partially overlap the first layer 111 of the image 110. For example, the DPU 212 (or the display driver circuitry 221) may identify applying the filter to the first layer 111 of the image 110 and to the second layer 112 of the image 110 positioned below the first layer 111 of the image 110 to partially overlap the first layer 111 of the image 110, based on identifying, in accordance with the first information and the second information in the composition list, the second layer 112 of the image 110 positioned below the first layer 111 of the image 110 to partially overlap the first layer 111 of the image 110, and identifying, in accordance with the third information in the composition list, applying the filter to the first layer 111 and the second layer 112 of the image 110. As a non-limiting example, the composition list may further include the fifth information indicating that the first layer 111 of the image 110 and the second layer 112 of the image 110 are opaque. The description associated with the fifth information is exemplified in more detail with reference to FIGS. 13 to 16.

The DPU 212 (or the display driver circuitry 221) may identify, in accordance with the identification, pixels (e.g., pixels positioned in an area 951) corresponding to the first layer 111 of the image 110 and the second layer 112 of the image 110, and may perform a pixel processing (e.g., the pixel processing 701 or the pixel processing 801) with respect to the identified pixels corresponding to the first layer 111 of the image 110 and the second layer 112 of the image 110 to apply the filter to the first layer 111 of the image 110 and the second layer 112 of the image 110. For example, the image 110 may be displayed on the display panel 160 according to the pixel processing, as a state 950. For example, in the state 950, a viewing angle of the area 951, which includes the first layer 111 of the image 110 and the second layer 112 of the image 110 partially overlapping the first layer 111 of the image 110, may be narrower than a viewing angle of a portion of the third layer 113 of the image 110 not overlapping the first layer 111 of the image 110 and the second layer 112 of the image 110.

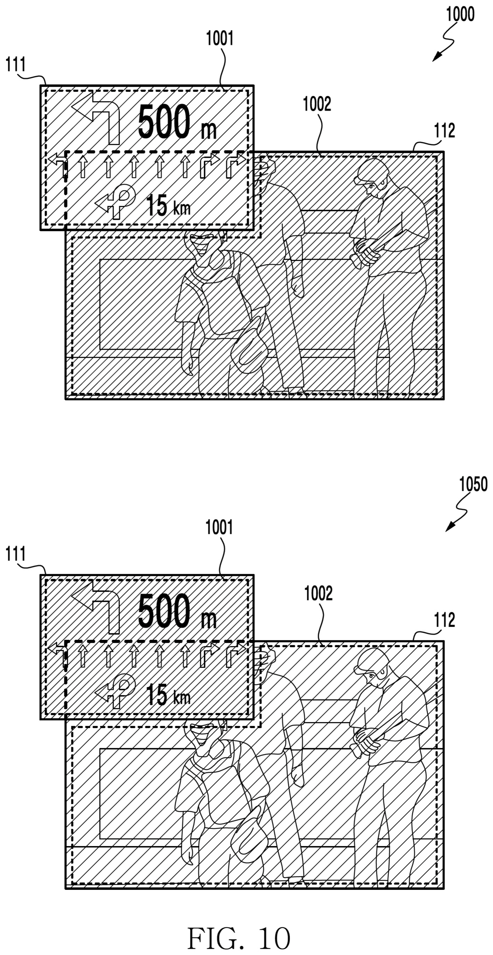

Referring back to FIG. 2, an intensity of applying the filter to a first layer of an image to be displayed on the display panel 160 may be different from an intensity of applying the filter to a second layer of the image to be displayed on the display panel 160. For example, the second layer (e.g., the second layer 112) of the image may be positioned below the first layer (e.g., the first layer 111) of the image to partially overlap the first layer of the image. For example, the DPU 212 (or the display driver circuitry (221) an intensity of the filter applied to an area of the display panel 160 in which the first layer of the image and the second layer of the image overlap each other may be an intensity of applying the filter to the first layer of the image positioned above the second layer of the image. Applying the filter to an area of the display panel 160 in which the first layer of the image and the second layer of the image overlap each other with an intensity of applying the filter to the first layer of the image is described in more detail with reference to FIG. 10.

FIG. 10 illustrates an example of a pixel processing performed for applying a filter for user privacy to a first layer of the image with a first intensity and a filter for user privacy to a second layer of the image with a second intensity.

Referring to FIG. 10, the DPU 212 (or the display driver circuitry 221) may identify, by using the composition list, applying the filter to the first layer 111 of the image 110 to be displayed on the display panel 160 with a first intensity, and applying the filter to the second layer 112 of the image 110 positioned below the first layer 111 of the image 110 to partially overlap the first layer 111 of the image 110 with a second intensity greater than the first intensity. For example, the DPU 212 (or the display driver circuitry 221) may identify applying the filter to the first layer 111 of the image 110 with the first intensity and applying the filter to the second layer 112 of the image 110 positioned below the first layer 111 of the image 110 to partially overlap the first layer 111 of the image 110 with the second intensity, based on identifying the second layer 112 of the image 110 positioned below the first layer 111 of the image 110 to partially overlap the first layer 111 of the image 110 in accordance with the first information (e.g., the first information of Table 1) and the second information (e.g., the second information of Table 1) in the composition list, identifying applying the filter to the first layer 111 of the image 110 and the second layer 112 of the image 110 in accordance with the third information (e.g., the third information of Table 1) in the composition list, and identifying that an intensity of the filter applied to the first layer 111 of the image 110 is the first intensity and an intensity of the filter applied to the second layer 112 of the image 110 is the second intensity in accordance with the fourth information (e.g., the fourth information of Table 1) in the composition list. For example, the DPU 212 (or the display driver circuitry 221) may, in accordance with the identification, perform a pixel processing (e.g., the pixel processing 701 or the pixel processing 801) with respect to pixels corresponding to the first layer 111 of the image 110 to apply the filter to the first layer 111 of the image 110 with the first intensity, and may perform a pixel processing (e.g., the pixel processing 701 or the pixel processing 801) with respect to pixels corresponding to a portion of the second layer 112 of the image 110 not overlapping the first layer 111 of the image 110 to apply the filter to the second layer 112 of the image 110 with the second intensity. For example, the first layer 111 of the image 110 and the second layer 112 of the image 110 may be displayed as a state 1000, according to the pixel processing performed with respect to the pixels corresponding to the first layer 111 of the image 110 and the pixel processing performed with respect to the pixels corresponding to the portion of the second layer 112 of the image 110. For example, in the state 1000, a viewing angle of the first layer 111 of the image 110 displayed on an area 1001 of the display panel 160 may be wider than a viewing angle of the portion (e.g., not overlapping the first layer 111 of the image 110) of the second layer 112 of the image 110 displayed on an area 1002 of the display panel 160.

The DPU 212 (or the display driver circuitry 221) may identify, by using the composition list, applying the filter to the first layer 111 of the image 110 to be displayed on the display panel 160 with the second intensity, and applying the filter to the second layer 112 of the image 110 positioned below the first layer 111 of the image 110 to partially overlap the first layer 111 of the image 110 with the first intensity. For example, the DPU 212 (or the display driver circuitry 221) may identify applying the filter to the first layer 111 of the image 110 with the second intensity and applying the filter to the second layer 112 of the image 110 positioned below the first layer 111 of the image 110 to partially overlap the first layer 111 of the image 110 with the first intensity, based on identifying the second layer 112 of the image 110 positioned below the first layer 111 of the image 110 to partially overlap the first layer 111 of the image 110 according to the first information (e.g., the first information of Table 1) and the second information (e.g., the second information of Table 1) in the composition list, identifying applying the filter to the first layer 111 of the image 110 and the second layer 112 of the image 110 according to the third information (e.g., the third information of Table 1) in the composition list, and identifying that an intensity of the filter applied to the first layer 111 of the image 110 is the second intensity and an intensity of the filter applied to the second layer 112 of the image 110 is the first intensity (e.g., smaller than the second intensity) according to the fourth information (e.g., the fourth information of Table 1) in the composition list. For example, the DPU 212 (or the display driver circuitry 221) may, in accordance with the identification, perform a pixel processing (e.g., the pixel processing 701 or the pixel processing 801) with respect to pixels corresponding to the first layer 111 of the image 110 to apply the filter to the first layer 111 of the image 110 with the second intensity, and may perform a pixel processing (e.g., the pixel processing 701 or the pixel processing 801) with respect to pixels corresponding to a portion of the second layer 112 of the image 110 not overlapping the first layer 111 of the image 110 to apply the filter to the second layer 112 of the image 110 with the first intensity. For example, the first layer 111 of the image 110 and the second layer 112 of the image 110 may be displayed as a state 1050, according to the pixel processing performed with respect to the pixels corresponding to the first layer 111 of the image 110 and the pixel processing performed with respect to the pixels corresponding to the portion of the second layer 112 of the image 110. For example, in the state 1050, a viewing angle of the first layer 111 of the image 110 displayed on an area 1001 of the display panel 160 may be narrower than a viewing angle of the portion (e.g., not overlapping the first layer 111 of the image 110) of the second layer 112 of the image 110 displayed on an area 1002 of the display panel 160.

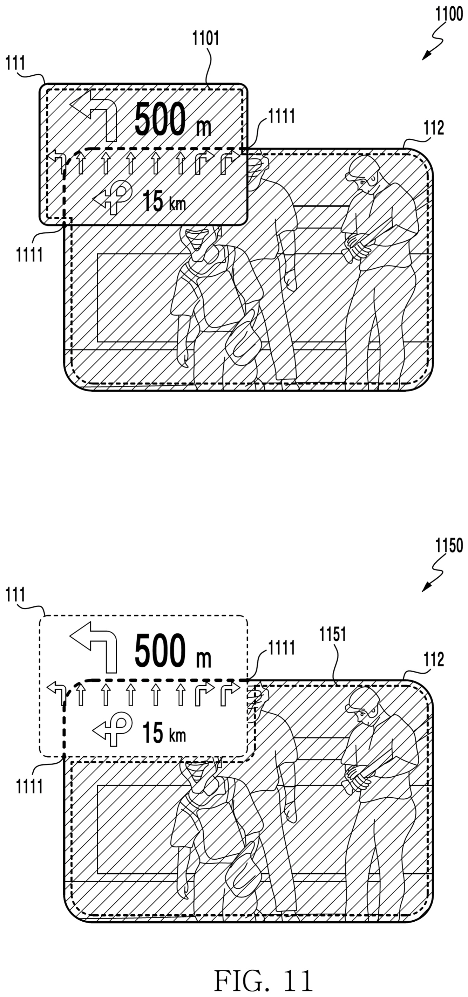

Referring back to FIG. 2, each corner of each layer of the image displayed on the display panel 160 may have a radius of curvature indicated by the sixth information (e.g., the sixth information of Table 1) in the composition list. For example, a radius of curvature of each corner defined (additionally) at a position where the first layer of the image to which the filter is applied and the second layer of the image to which the filter is applied are partially overlapped with each other may be different from a radius of curvature of each corner of the first layer of the image and a radius of curvature of each corner of the second layer of the image indicated by the sixth information. For example, a radius of curvature of each corner defined (additionally) at a position where the first layer of the image to which the filter is not applied and the second layer of the image to which the filter is applied are partially overlapped with each other may be different from a radius of curvature of each corner of the first layer of the image and a radius of curvature of each corner of the second layer of the image indicated by the sixth information. A radius of curvature of each corner defined at a position where layers of the image are partially overlapped with each other is described in more detail with reference to FIG. 11.

FIG. 11 illustrates an example of applying a filter for user privacy to at least one layer of the image having rounded corners.

Referring to FIG. 11, the DPU 212 (or the display driver circuitry 221) may identify, by using the composition list, applying the filter to the first layer 111 of the image 110 having rounded corners, and applying the filter to the second layer 112 of the image 110, positioned below the first layer 111 of the image 110 to partially overlap the first layer 111 of the image 110 and having rounded corners. For example, the DPU 212 (or the display driver circuitry 221) may identify applying the filter to the first layer 111 of the image 110 having rounded corners and applying the filter to the second layer 112 of the image 110, positioned below the first layer 111 of the image 110 to partially overlap the first layer 111 of the image 110 and having rounded corners, based on identifying the second layer 112 of the image 110 positioned below the first layer 111 of the image 110 to partially overlap the first layer 111 of the image 110 in accordance with the first information (e.g., the first information of Table 1) and the second information (e.g., the second information of Table 1) in the composition list, identifying applying the filter to the first layer 111 of the image 110 and the second layer 112 of the image 110 in accordance with the third information (e.g., the third information of Table 1) in the composition list, and identifying that a radius of curvature of corners of the first layer 111 of the image 110 is a first radius and a radius of curvature of corners of the second layer 112 of the image 110 is a second radius longer than the first radius in accordance with the sixth information (e.g., the sixth information of Table 1) in the composition list. For example, the DPU 212 (or the display driver circuitry 221) may, in accordance with the identification, identify pixels in an area 1101 corresponding to the first layer 111 of the image 110 having first corners with a radius of curvature equal to the first radius and the second layer 112 of the image 110 having second corners with a radius of curvature equal to the second radius, and may perform a pixel processing (e.g., the pixel processing 701 or the pixel processing 801) with respect to the pixels in the area 1101. For example, the first layer 111 of the image 110 and the second layer 112 of the image 110 may be displayed on the display panel 160 as a state 1100 according to the pixel processing. For example, in the state 1100, a radius of curvature of corners 1111 defined (additionally) at positions where the first layer 111 of the image 110 to which the filter is applied and the second layer 112 of the image 110 to which the filter is applied are overlapped with each other may be different from the first radius (e.g., corresponding to a radius of curvature of the first layer 111 of the image 110) and the second radius (e.g., corresponding to a radius of curvature of the second layer 112 of the image 110) indicated by the sixth information. For example, the radius of the curvature of the corners 1111 may be 0(zero), which is different from the first radius and the second radius.

The DPU 212 (or the display driver circuitry 221) may identify, by using the composition list, not applying the filter to the first layer 111 of the image 110 having rounded corners, and applying the filter to the second layer 112 of the image 110, positioned below the first layer 111 of the image 110 to partially overlap the first layer 111 of the image 110 and having rounded corners. For example, the DPU 212 (or the display driver circuitry 221) may identify not applying the filter to the first layer 111 of the image 110 having rounded corners and applying the filter to the second layer 112 of the image 110, positioned below the first layer 111 of the image 110 to partially overlap the first layer 111 of the image 110 and having rounded corners, based on identifying the second layer 112 of the image 110 positioned below the first layer 111 of the image 110 to partially overlap the first layer 111 of the image 110 in accordance with the first information (e.g., the first information of Table 1) and the second information (e.g., the second information of Table 1) in the composition list, identifying applying the filter to the second layer 112 of the image 110 in accordance with the third information (e.g., the third information of Table 1) in the composition list, and identifying that a radius of curvature of corners of the first layer 111 of the image 110 is the first radius and a radius of curvature of corners of the second layer 112 of the image 110 is the second radius in accordance with the sixth information (e.g., the sixth information of Table 1) in the composition list. For example, the DPU 212 (or the display driver circuitry 221) may, in accordance with the identification, identify pixels in an area 1151 corresponding to a portion of the second layer 112 of the image 110 having second corners with a radius of curvature equal to the second radius (e.g., not overlapping the first layer 111 of the image 110 having first corners with a radius of curvature equal to the first radius), and may perform a pixel processing (e.g., the pixel processing 701 or the pixel processing 801) with respect to the pixels in the area 1151. For example, the first layer 111 of the image 110 and the second layer 112 of the image 110 may be displayed on the display panel 160 as a state 1150, according to the pixel processing. For example, in the state 1150, a radius of curvature of corners 1111 defined (additionally) at positions where the first layer 111 of the image 110 to which the filter is not applied and the second layer 112 of the image 110 to which the filter is applied are overlapped with each other may be different from the first radius (e.g., corresponding to a radius of curvature of the first layer 111 of the image 110) and the second radius (e.g., corresponding to a radius of curvature of the second layer 112 of the image 110) indicated by the sixth information. For example, the radius of the curvature of the corners 1111 may be 0 (zero), which is different from the first radius and the second radius.

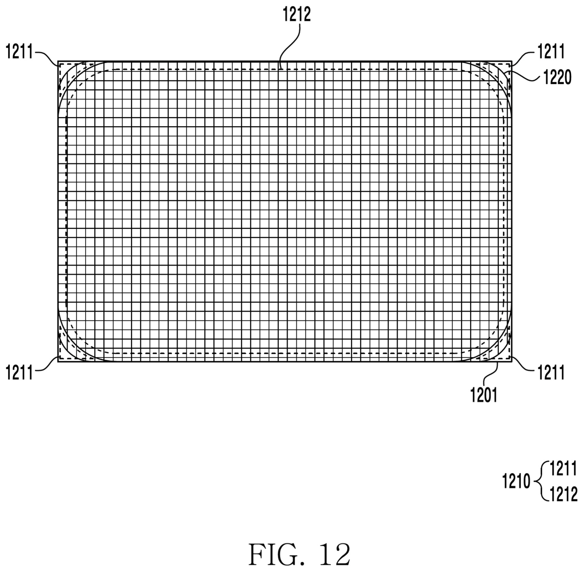

Referring back to FIG. 2, a radius of curvature of each of corners of a layer of an image indicated by the sixth information in the composition list may be different from a radius of curvature of each of the corners of the layer of the image displayed on the display panel 160. For example, when the sixth information indicates that a radius of curvature of each of the corners of the layer of the image is 0, and a visual content in the layer of the image includes transparent portions and opaque (or translucent) portions having rounded corners, positioned in corner areas of the layer of the image, the radius of the curvature of each of the corners of the layer of the image indicated by the sixth information in the composition list may be different from the radius of the curvature of each of the corners of the layer of the image displayed on the display panel 160. For example, since applying the filter to the layer of the image including the visual content in accordance with the third information (e.g., the third information of Table 1) and the sixth information (e.g., the sixth information of Table 1) in the composition list applies the filter to an area (e.g., corresponding to the transparent portion of the visual content) of the display panel 160 positioned outside rounded corners (e.g., corresponding to the opaque portion (or the translucent portion) of the visual content having the rounded corners) of the layer of the image recognized by the user, applying the filter to the layer of the image including the visual content in accordance with the third information and the sixth information in the composition list may cause user discomfort. For example, in order to reduce this discomfort, the DPU 212 (or the display driver circuitry 221) may apply the filter with respect to the layer of the image, based on identifying data in each of alpha channels of the layer of the image. Applying the filter with respect to the layer of the image based on identifying the data in each of the alpha channels of the layer of the image is described in more detail with reference to FIG. 12.

FIG. 12 illustrates an example of applying a filter for user privacy for content in a layer of an image having rounded corners.

Referring to FIG. 12, the sixth information (e.g., the sixth information of Table 1) in the composition list obtained by the DPU 212 (or the display driver circuitry 221) may indicate that a radius of curvature of each of corners of a layer 1201 in an image to be displayed on the display panel 160 is 0 (zero). For example, the layer 1201 may include a visual content 1210 including transparent portions 1211 positioned in corner areas of the layer 1201 and an opaque (or translucent) portion 1212 having rounded corners. For example, the DPU 212 (or the display driver circuitry 221) may recognize that the visual content 1210 in the layer 1201 includes the transparent portions 1211 positioned in the corner areas of the layer 1201 according to identifying data (e.g., transparency data) in each of alpha channels of the layer 1201. As a non-limiting example, the recognition may be performed by providing information regarding the layer 1201 to a model trained through machine learning. For example, the DPU 212 (or the display driver circuitry 221) may, in accordance with the recognition, perform a pixel processing (e.g., the pixel processing 701 or the pixel processing 801) with respect to pixels in an area 1220 of the display panel 160 including a periphery positioned along a periphery of an opaque (or translucent) portion 1212 of the visual content 1210, independently of the composition list indicating applying the filter to the layer 1201, which is a rectangle. For example, the electronic device 100 may enhance a quality of the filter applied with respect to the layer 1201, which is viewed differently from the sixth information in the composition list, by performing the pixel processing using the DPU 212 (or the display driver circuitry 221).

Referring back to FIG. 2, a first layer (e.g., the first layer 111) of an image (e.g., the image 110) positioned on a second layer (e.g., the second layer 112) of the image to which the filter is applied to partially overlap the second layer of the image may be transparent or translucent. For example, when the filter is not applied to a portion of the first layer of the image overlapping of the second layer of the image, at least one visual content in a portion of the second layer of the image overlapping the transparent or translucent first layer of the image, may be viewable through the portion of the first layer of the image. For example, since the at least one visual content in the portion of the second layer of the image that is viewable through the portion of the first layer of the image may cause an invasion of user privacy, a pixel processing (e.g., the pixel processing 701 or the pixel processing 801) performed by using the composition list indicating that the filter is applied to the second layer of the image positioned below the first layer of the image to partially overlap the transparent or translucent first layer of the image may be variously defined. The pixel processing is described in more detail with reference to FIGS. 13 to 15.

FIGS. 13 to 15 illustrate methods of processing a first layer of an image when applying a filter for user privacy to a second layer of the image positioned below the first layer of the image to partially overlap the first layer, the first layer of the image being transparent or transparent.

Referring to FIG. 13, the DPU 212 (or the display driver circuitry 221) may identify applying the filter to a second layer 1302 positioned below a first layer 1301 to partially overlap the transparent or translucent first layer 1301, by using the composition list. For example, the DPU 212 (or the display driver circuitry 221) may identify applying the filter to the second layer 1302 positioned below the first layer 1301 to partially overlap the transparent or translucent first layer 1301, based on identifying the second layer 1302 positioned below the first layer 1301 to partially overlap the first layer 1301 in accordance with the first information (e.g., the first information of Table 1) and the second information (e.g., the second information of Table 1) in the composition list, identifying applying the filter to the second layer 1302 in accordance with the third information (e.g., the third information of Table 1) in the composition list, and identifying the transparent first layer 1301 in accordance with the fifth information (e.g., the fifth information of Table 1) in the composition list. For example, the DPU 212 (or the display driver circuitry 221) may, in accordance with the identification, perform a pixel processing (e.g., the pixel processing 701 or the pixel processing 801) with respect to pixels in a first area 1303 of the display panel 160 corresponding to a portion of the second layer 1302 not overlapping the first layer 1301 to apply the filter to the portion of the second layer 1302. For example, according to the pixel processing, a viewing angle of the first area 1303 of the display panel 160 corresponding to the portion of the second layer 1302 may be narrower than a viewing angle of a second area 1304 of the display panel 160 corresponding to a remaining portion of the second layer 1302 overlapping the first layer 1301 and a viewing angle of a third area 1305 of the display panel 160 corresponding to a portion of the first layer 1301 not overlapping the second layer 1302.

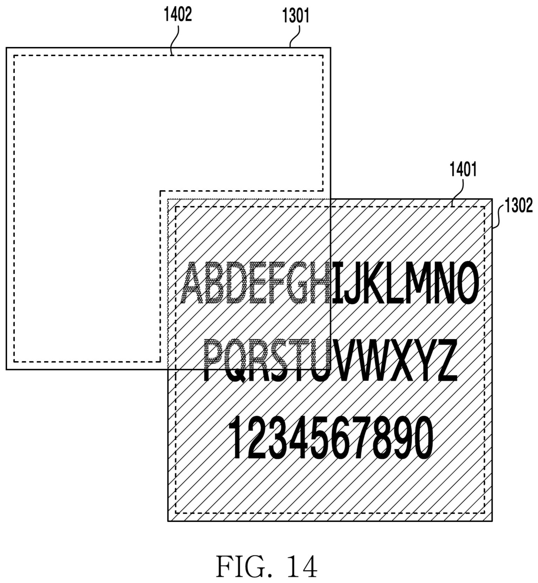

Referring to FIG. 14, the DPU 212 (or the display driver circuitry 221) may identify, by using the composition list, applying the filter to the second layer 1302 positioned below the first layer 1301 to partially overlap the transparent or translucent first layer 1301. For example, the DPU 212 (or the display driver circuitry 221) may identify applying the filter to the second layer 1302 positioned below the first layer 1301 to partially overlap the transparent or translucent first layer 1301, based on identifying the second layer 1302 positioned below the first layer 1301 to partially overlap the first layer 1301 in accordance with the first information (e.g., the first information of Table 1) and the second information (e.g., the second information of Table 1) in the composition list, identifying applying the filter to the second layer 1302 in accordance with the third information (e.g., the third information of Table 1) in the composition list, and identifying the transparent first layer 1301 in accordance with the fifth information (e.g., the fifth information of Table 1) in the composition list. For example, the DPU 212 (or the display driver circuitry 221) may, in accordance with the identification, perform a pixel processing (e.g., the pixel processing 701 or the pixel processing 801) with respect to pixels in a first area 1401 of the display panel 160 corresponding to the second layer 1302 to apply the filter to the second layer 1302 and also apply the filter to a portion of the first layer 1301 overlapping the second layer 1302. For example, in accordance with the pixel processing, a viewing angle of the first area 1401 of the display panel 160 corresponding to the second layer 1302 may be narrower than a viewing angle of the second area 1402 of the display panel 160 corresponding to a portion of the first layer 1301 not overlapping the second layer 1302.

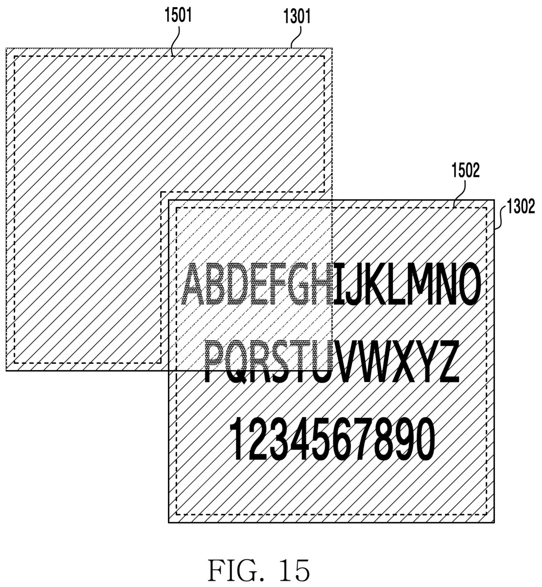

Referring to FIG. 15, the DPU 212 (or the display driver circuitry 221) may identify, by using the composition list, applying the filter to the second layer 1302 positioned below the first layer 1301 to partially overlap the transparent or translucent first layer 1301. For example, the DPU 212 (or the display driver circuitry 221) may identify applying the filter to the second layer 1302 positioned below the first layer 1301 to partially overlap the transparent or translucent first layer 1301, based on identifying the second layer 1302 positioned below the first layer 1301 to partially overlap the first layer 1301 in accordance with the first information (e.g., the first information of Table 1) and the second information (e.g., the second information of Table 1) in the composition list, identifying applying the filter to the second layer 1302 in accordance with the third information (e.g., the third information of Table 1) in the composition list, and identifying the transparent first layer 1301 in accordance with the fifth information (e.g., the fifth information of Table 1) in the composition list. For example, the DPU 212 (or the display driver circuitry 221) may, in accordance with the identification, perform a pixel processing (e.g., the pixel processing 701 or the pixel processing 801) with respect to pixels in a first area 1501 of the display panel 160 corresponding to the portion of the first layer 1301 and a second area 1502 of the display panel 160 corresponding to the second layer 1302 to apply the filter to the second layer 1302 and also apply the filter to a portion of the first layer 1301 not overlapping the second layer 1302. For example, according to the pixel processing, a viewing angle of the second area 1502 of the display panel 160 corresponding to the second layer 1302 may be substantially the same as a viewing angle of the first area 1501 of the display panel 160 corresponding to the portion of the first layer 1301 not overlapping the second layer 1302.

As a non-limiting example, the DPU 212 (or the display driver circuitry 221) may adaptively perform one operation among a first operation described with reference to FIG. 13, a second operation described with reference to FIG. 14, and a third operation described with reference to FIG. 15 according to a transparency of the first layer 1301. For example, the DPU 212 (or the display driver circuitry 221) may perform the first operation when the transparency of the first layer 1301 is within a first range, and the DPU 212 (or the display driver circuitry 221) may perform the second operation when the transparency of the first layer 1301 is within a second range (e.g., including values higher than values within the first range), and the DPU 212 (or the display driver circuitry 221) may perform the third operation when the transparency of the first layer 1301 is within a third range (e.g., including values higher than values within the second range).

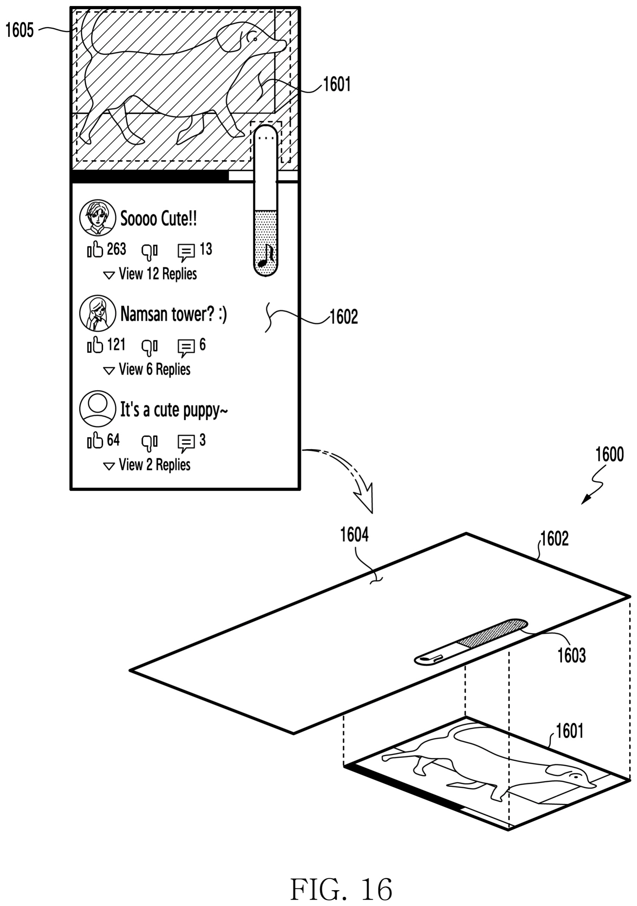

Referring back to FIG. 2, the at least one processor 210 (or the CPU 211) may determine a position of the layer indicated by the first information in the composition list by using information of alpha channels of a layer of an image to be displayed on the display panel 160. For example, the composition list including the first information indicating the determined position may be used to apply the filter. Applying the filter by using the composition list including the first information indicating the determined position is described in more detail with reference to FIG. 16.

FIG. 16 illustrates an example of a filter for user privacy applied according to information of alpha channels for an image.

Referring to FIG. 16, the at least one processor 210 may obtain a first layer 1601 having a first size and a second layer 1602, positioned above the first layer 1601 to partially overlap the first layer 1601 and having a second size larger than the first size, for an image 1600 to be displayed on the display panel 160. For example, a portion of the second layer 1602 may overlap an entire area of the first layer 1601. For example, the at least one processor 210 may identify (or recognize) that the second layer 1602 includes an opaque first portion 1603 and a transparent (or translucent) second portion 1604, according to information of alpha channels of the second layer 1602 positioned above the first layer 1601. As a non-limiting example, the identifying (or recognizing) may be performed by using a model trained through machine learning. For example, the at least one processor 210 may determine, based on identifying applying the filter to the first layer 1601 positioned below the second layer 1602 according to a user input, the position of the second layer 1602 as a position of the first portion 1603 of the second layer 1602. For example, the at least one processor 210 may input the position of the first portion 1603 of the second layer 1602 into the first information (e.g., the first information of Table 1) in the composition list defined for the second layer 1602, to perform a pixel processing (e.g., the pixel processing 701 or the pixel processing 801) with respect to pixels in an area 1605 of the display panel 160 corresponding to a portion of the first layer 1601 positioned below the second portion 1604 of the second layer 1602.

FIG. 16 illustrates an example in which a position of a first portion 1603 of the second layer 1602 is inputted into the first information in the composition list as a position of the second layer 1602, but this is only exemplary. For example, the at least one processor 210 may also input a position of the second layer 1602 into the first information in the composition list to refrain from applying the filter to the first layer 1601, based on identifying that the first layer 1601 is not viewable through the second portion 1604 of the translucent second layer 1602, by using the model.

The above-described operations for the filter may be executed in an electronic device 1701 described with reference to FIGS. 17 and 18.

FIG. 17 is a block diagram illustrating an electronic device 1701 in a network environment 1700 according to various embodiments. Referring to FIG. 17, the electronic device 1701 in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input module 1750, a sound output module 1755, a display module 1760, an audio module 1770, a sensor module 1776, an interface 1777, a connecting terminal 1778, a haptic module 1779, a camera module 1780, a power management module 1788, a battery 1789, a communication module 1790, a subscriber identification module(SIM) 1796, or an antenna module 1797. In some embodiments, at least one of the components (e.g., the connecting terminal 1778) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760).

The processor 1720 may execute, for example, software (e.g., a program 1740) to control at least one other component (e.g., a hardware or software component) of the electronic device 1701 coupled with the processor 1720, and may perform various data processing or computation. According to an embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thereto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input module 1750 may receive a command or data to be used by another component (e.g., the processor 1720) of the electronic device 1701, from the outside (e.g., a user) of the electronic device 1701. The input module 1750 may include, for example, a microphone, a mouse, a keyboard, a key (e.g., a button), or a digital pen (e.g., a stylus pen).

The sound output module 1755 may output sound signals to the outside of the electronic device 1701. The sound output module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1760 may visually provide information to the outside (e.g., a user) of the electronic device 1701. The display module 1760 may include, for example, a display, a hologram device, or a projector and control circuitry to control a corresponding one of the display, hologram device, and projector. According to an embodiment, the display module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input module 1750, or output the sound via the sound output module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, an HDMI connector, a USB connector, an SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to an embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth^{™}, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 1764dB or less) for implementing mMTC, or U-plane latency (e.g., 0.5ms or less for each of downlink (DL) and uplink (UL), or a round trip of 17ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to various embodiments, the antenna module 1797 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example. The electronic device 1701 may provide ultra low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

FIG. 18 is a block diagram 1800 illustrating the display module 1760 according to various embodiments. Referring to FIG. 18, the display module 1760 may include a display 1810 and a display driver integrated circuit (DDI) 1830 to control the display 1810. The DDI 1830 may include an interface module 1831, memory 1833 (e.g., buffer memory), an image processing module 1835, or a mapping module 1837. The DDI 1830 may receive image information that contains image data or an image control signal corresponding to a command to control the image data from another component of the electronic device 1701 via the interface module 1831. For example, according to an embodiment, the image information may be received from the processor 1720 (e.g., the main processor 1721 (e.g., an application processor)) or the auxiliary processor 1723 (e.g., a graphics processing unit) operated independently from the function of the main processor 1721. The DDI 1830 may communicate, for example, with touch circuitry 1850 or the sensor module 1776 via the interface module 1831. The DDI 1830 may also store at least part of the received image information in the memory 1833, for example, on a frame by frame basis. The image processing module 1835 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1810. The mapping module 1837 may generate a voltage value or a current value corresponding to the image data pre-processed or post-processed by the image processing module 1835. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1810 may be driven, for example, based at least in part on the voltage value or the current value such that visual information (e.g., a text, an image, or an icon) corresponding to the image data may be displayed via the display 1810.

According to an embodiment, the display module 1760 may further include the touch circuitry 1850. The touch circuitry 1850 may include a touch sensor 1851 and a touch sensor IC 1853 to control the touch sensor 1851. The touch sensor IC 1853 may control the touch sensor 1851 to sense a touch input or a hovering input with respect to a certain position on the display 1810. To achieve this, for example, the touch sensor 1851 may detect (e.g., measure) a change in a signal (e.g., a voltage, a quantity of light, a resistance, or a quantity of one or more electric charges) corresponding to the certain position on the display 1810. The touch circuitry 1850 may provide input information (e.g., a position, an area, a pressure, or a time) indicative of the touch input or the hovering input detected via the touch sensor 1851 to the processor 1720. According to an embodiment, at least part (e.g., the touch sensor IC 1853) of the touch circuitry 1850 may be formed as part of the display 1810 or the DDI 1830, or as part of another component (e.g., the auxiliary processor 1723) disposed outside the display module 1760.

According to an embodiment, the display module 1760 may further include at least one sensor (e.g., a fingerprint sensor, an iris sensor, a pressure sensor, or an illuminance sensor) of the sensor module 1776 or a control circuit for the at least one sensor. In such a case, the at least one sensor or the control circuit for the at least one sensor may be embedded in one portion of a component (e.g., the display 1810, the DDI 1830, or the touch circuitry 1850)) of the display module 1760. For example, when the sensor module 1776 embedded in the display module 1760 includes a biometric sensor (e.g., a fingerprint sensor), the biometric sensor may obtain biometric information (e.g., a fingerprint image) corresponding to a touch input received via a portion of the display 1810. As another example, when the sensor module 1776 embedded in the display module 1760 includes a pressure sensor, the pressure sensor may obtain pressure information corresponding to a touch input received via a partial or whole area of the display 1810. According to an embodiment, the touch sensor 1851 or the sensor module 1776 may be disposed between pixels in a pixel layer of the display 1810, or over or under the pixel layer.

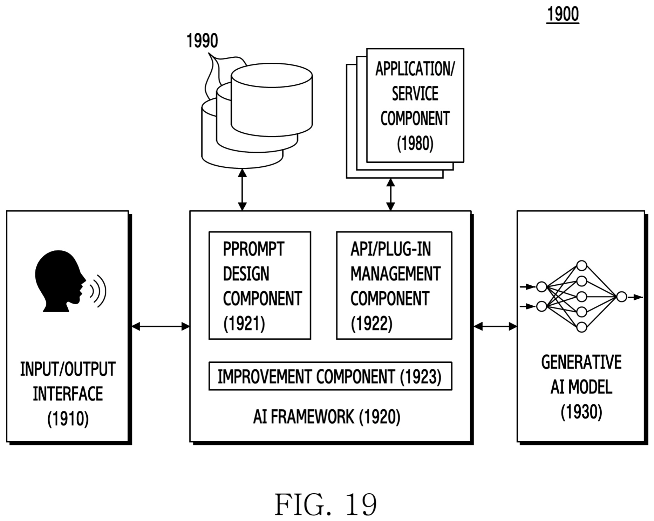

Some of the above-described operations may be executed (or performed) through an artificial intelligence (AI) system described with reference to FIG. 19.

FIG. 19 is a schematic diagram of an exemplary AI system.

Referring to FIG. 19, an AI system 1900 may include an input/output interface 1910, an artificial intelligence (AI) framework 1920, a generative AI model 1930, an application/service component 1980, and/or a knowledge storage 1990.

The input/output interface 1910 may receive an input. The input may include a user input and/or data obtained or generated by an electronic device (e.g., the above-described electronic device 100 or the electronic device 1701). The data may include an image, a video, and/or sensor data (e.g., illuminance data of surroundings of the electronic device obtained from a sensor or a sensor hub (e.g., the auxiliary processor 1723), posture data (or orientation data) of the electronic device, an internal temperature of the electronic device (e.g., a temperature of the display 220 or of the at least one processor 210), size information of a display area of the display 220, and/or an image obtained through an image sensor (e.g., included in the camera module 1780) of the electronic device) generated by at least one processor (e.g., the at least one processor 210 or the processor 1720) of the electronic device. The user input may include a natural language, touch data obtained through touch circuitry included in the display panel 160 (e.g., used to identify an input from a finger and/or a stylus), an image displayed (and/or to be displayed) on the display panel 160, and/or a video. As a non-limiting example, the user input may be received by the input/output interface 1910 together with context information. The context information may be described as additional information obtained in relation to the user input. The context information may be related to a state when the user input is received (e.g., including a state of the electronic device and/or a state around the electronic device (e.g., a user state)). For example, the context information may include information about one or more software applications executed in the electronic device when the user input is received. For example, the context information may include information about a position of the electronic device (or a position of a user of the electronic device) when the user input is received. For example, the user input may be integrated with the context information. For example, as the user input, the user input integrated with the context information may be received by the input/output interface 1910.

The input/output interface 1910 may transmit (or provide) an output. The output may include a result (or result information) generated or obtained by the AI system 1900 based at least in part on the input. A format of the output may vary. For example, the output may include a natural language. For example, the output may include a content (e.g., including media content and/or multimedia content). For example, the output may include an action related to a user of the electronic device. For example, the output may have a format according to user settings of the electronic device.

The input/output interface 1910 may be described as a user query/response interface 1910.

The AI framework 1920 may obtain information (or data) about the input from the input/output interface 1910 and may be used to control one or more components related to the AI system 1900 by using the obtained information.

For example, a prompt design component 1921 in the AI framework 1920 may generate or obtain a prompt for the generative AI model 1930 (e.g., including a large language model (LLM) or a large multimodal model (LMM)) by using the obtained information. For example, the prompt design component 1921 may be described as an AI component that uses a learning algorithm and/or a neural network to provide an enhanced prompt over time. For example, the prompt design component 1921 may generate or obtain a prompt by accessing a knowledge component (e.g., the knowledge storage 1990) including user preference data, a prompt library, and/or a prompt example by using the obtained information. The generated prompt may be provided to the generative AI model 1930 (e.g., including the LLM or the LMM).

For example, an API/plugin management component 1922 in the AI framework 1920 may be used to support communication for additional information requested (or caused) in relation to the prompt provided (or to be provided) to the generative AI model 1930. For example, the API/plugin management component 1922 may be used to generate or establish a channel for communication with various data sources (e.g., the knowledge storage 1990). For example, the API/plugin management component 1922 may support access to at least a portion of the data sources. For example, the API/plugin management component 1922 may be used to request another component (e.g., an application/service component 1980) that performs feedback (or response) according to the prompt. As a non-limiting example, information obtained (or generated) through the API/plugin management component 1922 may be provided to the prompt design component 1921 for generating a prompt. As a non-limiting example, information obtained (or generated) through the API/plugin management component 1922 may be provided to the generative AI model 1930.

For example, an improvement component 1923 in the AI framework 1920 may at least partially tune (or adjust) (or modify) a result (e.g., content) obtained (or outputted) from the generative AI model 1930. For example, the improvement component 1923 may determine or verify whether a content obtained from the generative AI model 1930 is related to the input. For example, the improvement component 1923 may determine or verify whether a content obtained from the generative AI model 1930 includes biased information. For example, the improvement component 1923 may determine or verify whether a content obtained from the generative AI model 1930 includes harmful content. For example, the improvement component 1923 may support or assist in performing an additional processing to improve a content obtained from the generative AI model 1930. For example, the improvement component 1923 may support providing a hint to a user to improve the content.

The generative AI model 1930 may be described as an artificial intelligence neural network that generates feedback, in response to a prompt. For example, the feedback may be related to the prompt, but may further include additional data and/or information relative to the prompt. For example, the feedback may include a new content relative to the prompt. For example, the generative AI model 1930 may include a model generating an image and/or a model generating a language. For example, the model generating an image may include a generative adversarial network (GAN) and/or a variational auto encoder (VAE). For example, the model generating an image may include a diffusion-based generative model (e.g., a transformer VAE). For example, the model generating a language may include CHAT-GPT 3 and/or CHAT-GPT 4. For example, the generative AI model 1930 may include an LMM generating the feedback by recognizing text, an image, and/or a voice.

As a non-limiting example, the AI framework 1920 and/or the generative AI model 1930 may be included in an AI module (e.g., including processing circuitry) in the electronic device. For example, the AI module may be operably coupled with at least one processor (e.g., the at least one processor 210 or the processor 1720) of the electronic device. For example, the AI module may be operably coupled with display driver circuitry (e.g., the display driver circuitry 221 or the DDI 1830) of the electronic device. For example, the AI module may be operably coupled with a sensor hub of the electronic device for one or more sensors in the electronic device.

The technical problems to be achieved in this document are not limited to those described above, and other technical problems not mentioned herein will be clearly understood by those having ordinary knowledge in the art to which the present disclosure belongs, from the following description.

As described above, an electronic device (e.g., the electronic device 100) may comprise a display panel (e.g., the display panel 160). The display panel may include a layer (e.g., the other layer 402) including an opaque member. The opaque member may include first light transmittance portions (e.g., the first light transmittance portion 431) and second light transmittance portions (e.g., the second light transmittance portions 432) smaller than the first light transmittance portions. The display panel may include another layer (e.g., the layer 401), disposed below the layer of the display panel, including sub-pixels respectively disposed below the first light transmittance portions and sub-pixels respectively disposed below the second light transmittance portions. The electronic device may include display driver circuitry (e.g., the display driver circuitry 221). The electronic device may include at least one processor (e.g., the at least one processor 210) including processing circuitry. The display driver circuitry may be configured to obtain, from the at least one processor, a composition list regarding layers included in an image to be displayed on the display panel; receive, from the at least one processor, the image; identify, using the composition list, applying a filter for user privacy to a second layer of the image positioned below a first layer of the image to partially overlap the first layer of the image, the first layer of the image being transparent or translucent; and in accordance with the identification, based on performing a pixel processing with respect to pixels corresponding to the second layer of the image to apply the filter to the second layer of the image and also apply the filter to a portion of the first layer overlapping the second layer of the image, display, on the display panel, the image including the portion of the first layer having a viewing angle narrower than a viewing angle of a remaining portion of the first layer, and the second layer that has a viewing angle narrower than the viewing angle of the remaining portion of the first layer.

For example, the display driver circuitry may be configured to, further based on refraining from performing the pixel processing with respect to pixels corresponding to the remaining portion of the first layer of the image that does not overlap the second layer of the image, display, on the display, the image.

For example, the display driver circuitry may be configured to obtain, by receiving a command corresponding to the composition list from the at least one processor, the composition list from the at least one processor. For example, receiving the command may be synchronized with receiving the image.

For example, the pixel processing may be performed with respect to the pixels corresponding to the second layer of the image on sub-pixel basis.

For example, the display driver circuitry may be configured to, after performing, with respect to displaying the image, one or more other pixel processing that adjusts a data voltage provided to at least another sub-pixel in the display panel adjacent to a sub-pixel in the display panel in conjunction with adjusting a data voltage provided to the sub-pixel in the display panel, perform the pixel processing with respect to the pixels corresponding to the second layer of the image.

For example, the one or more other pixel processing may comprise performing an upscaling with respect to the image, performing an edge sharpening of at least one visual object included in the image, performing a blur processing with respect to at least a portion of the image, performing a high dynamic range (HDR) processing with respect to at least a portion of the image, performing a temporal dithering with respect to at least a portion of the image, performing a spatial dithering with respect to at least a portion of the image, performing a compensating of gradation with respect to the image, and/or performing a compensating of color temperature with respect to the image.

For example, each of sub-pixels in the display panel may comprise organic light emitting diode (OLED). For example, the display driver circuitry may be configured to, after performing the pixel processing with respect to the pixels corresponding to the second layer of the image, adjust a data voltage to be provided to a portion of the plurality of pixels for a burn-in compensation.

For example, the composition list may include first information indicating a position of each of the first layer and the second layer of the image, second information indicating a stacking order of each of the first layer and the second layer of the image, third information indicating whether applying the filter to each of the first layer and the second layer of the image, and fourth information indicating transparency of each of the first layer and the second layer of the image. The display driver circuitry may be configured to identify applying the filter to the second layer of the image positioned below the first layer of the image to partially overlap the first layer of the image that is transparent or translucent, based on identifying, in accordance with the first information and the second information, the second layer of the image positioned below the first layer of the image to partially overlap the first layer of the image, identifying, in accordance with the third information, the second layer of the image applying the filter, and identifying, in accordance with the fourth information, the first layer of the image being transparent or translucent.

For example, the composition list may include fifth information indicating an intensity applying the filter to the second layer of the image. For example, the display driver circuitry may be configured to perform the pixel processing with respect the pixels corresponding to the second layer of the image to apply the filter to the portion of the first layer of the image in the intensity indicated by the fifth information.

For example, the second layer of the image may be opaque. For example, the image may include a third layer of the image positioned below the second layer of the image to partially overlap the second layer of the image. For example, the first information may further indicate a position of the third layer of the image. For example, the second information may further indicate a stacking order of the third layer of the image. For example, the third information may further indicate applying the filter to the third layer of the image. For example, the fifth information may further indicate another intensity applying the filter to the third layer of the image. For example, the other intensity applying the filter to the third layer of the image may be larger than the intensity applying the filter to the second layer of the image. For example, a viewing angle of a portion of the third layer of the image not overlapping the second layer of the image displayed on the display panel may be narrower than a viewing angle of the second layer of the image displayed on the display panel.

For example, the second layer of the image may be opaque. For example, the image may include a third layer of the image positioned below the second layer of the image to partially overlap the second layer of the image. For example, the first information may further indicate a position of the third layer of the image. For example, the second information may further indicate a stacking order of the third layer of the image. For example, the third information may further indicate applying the filter to the third layer of the image. For example, the fifth information may further indicate another intensity applying the filter to the third layer of the image. For example, the other intensity applying the filter to the third layer of the image may be smaller than the intensity applying the filter to the second layer of the image. For example, a viewing angle of a portion of the third layer of the image not overlapping the second layer of the image displayed on the display panel may be wider than a viewing angle of the second layer of the image displayed on the display panel.

For example, the composition list may include sixth information indicating a radius of curvature of corners of each of the first layer and the second layer of the image.

For example, the first information may indicate the position of each of the first layer and the second layer of the image adjusted by the at least one processor according to difference between a resolution of the image rendered by the at least one processor and a resolution of the display panel.

For example, adjusting the position of each of the first layer and the second layer of the image may be executed through one or more programs comprising instructions included in a kernel driver and/or a hardware abstraction layer (HAL) for a display comprising the display panel and the display driver circuitry.

For example, the display driver circuitry may be configured to determine, in accordance with the identification, performing the pixel processing with respect to a first area of the display panel in which the first layer of the image and the second layer of the image overlap each other and a second area of the display panel corresponding to a portion of the second layer of the image not overlapping the first layer of the image.

As described above, an electronic device (e.g., the electronic device 100) may comprise a display panel (e.g., the display panel 160). The display panel may be configured to adjust a viewing angle of an image displayed on the display panel. The electronic device may comprise display driver circuitry (e.g., the display driver circuitry 221). The electronic device may comprise at least one processor (e.g., the at least one processor 210) including processing circuitry. For example, the display driver circuitry may be configured to obtain, from the at least one processor, a composition list regarding layers included in an image to be displayed on the display panel; receive the image from the at least one processor; identify, by using the composition list, applying a filter for user privacy to a second layer positioned below a first layer to partially overlap the first layer, the first layer being transparent or translucent; in accordance with the identification, based on performing a pixel processing with respect to pixels corresponding to a portion of the first layer and pixels corresponding to the second layer to apply the filter to the second layer and also apply the filter to a portion of the first layer not overlapping the second layer, display, on the display panel, the image. For example, a viewing angle of a first area of the display panel in which the first layer and the second layer overlap each other, a second area of the display panel corresponding to the portion of the first layer not overlapping the second layer, and a third area of the display panel corresponding to a portion of the second layer not overlapping the first area may be narrower than a viewing angle of a fourth area of the display panel different from the first area of the display panel, the second area of the display panel, and the third area of the display panel, while displaying the image.

For example, the display driver circuitry may be configured to obtain, by receiving a command corresponding to the composition list from the at least one processor, the composition list from the at least one processor. For example, receiving the command may be synchronized with receiving the image.

For example, the pixel processing may be performed with respect to the pixels corresponding to the portion of the first layer of the image and the pixels corresponding to the second layer of the image on sub-pixel basis.

For example, the display driver circuitry may be configured to, after performing, with respect to displaying the image, one or more other pixel processing that adjusts a data voltage provided to at least another sub-pixel in the display panel adjacent to a sub-pixel in the display panel in conjunction with adjusting a data voltage provided to the sub-pixel in the display panel, perform the pixel processing with respect to the pixels corresponding to the portion of the first layer of the image and the pixels corresponding to the second layer of the image.

For example, the one or more other pixel processing may comprise performing an upscaling with respect to the image, performing an edge sharpening of at least one visual object included in the image, performing a blur processing with respect to at least a portion of the image, performing a high dynamic range (HDR) processing with respect to at least a portion of the image, performing a temporal dithering with respect to at least a portion of the image, performing a spatial dithering with respect to at least a portion of the image, performing a compensating of gradation with respect to the image, and/or performing a compensating of color temperature with respect to the image.

For example, each of sub-pixels in the display panel may comprise organic light emitting diode (OLED). For example, the display driver circuitry may be configured to, after performing the pixel processing with respect to the pixels corresponding to the portion of the first layer of the image and the pixels corresponding to the second layer of the image, adjust a data voltage to be provided to a portion of the plurality of pixels for a burn-in compensation.

For example, the composition list may include first information indicating a position of each of the first layer and the second layer of the image, second information indicating a stacking order of each of the first layer and the second layer of the image, third information indicating whether applying the filter to each of the first layer and the second layer of the image, and fourth information indicating transparency of each of the first layer and the second layer of the image. For example, the display driver circuitry may be configured to identify applying the filter to the second layer of the image positioned below the first layer of the image to partially overlap the first layer of the image that is transparent or translucent, based on identifying, in accordance with the first information and the second information, the second layer of the image positioned below the first layer of the image to partially overlap the first layer of the image, identifying, in accordance with the third information, the second layer of the image applying the filter, and identifying, in accordance with the fourth information, the first layer of the image being transparent or translucent.

For example, the composition list may include fifth information indicating an intensity of applying the filter to the second layer. For example, the display driver circuitry may be configured to perform the pixel processing with respect to pixels corresponding to the portion of the first layer of the image and pixels corresponding to the second layer of the image to apply the filter to the second layer with the intensity indicated by the fifth information and also apply the filter to the portion of the first layer with the intensity.

For example, the second layer of the image may be opaque. For example, the image may further include a third layer of the image positioned below the second layer of the image to partially overlap the second layer of the image. For example, the first information may further indicate a position of the third layer of the image. For example, the second information may further indicate a stacking order of the third layer of the image. For example, the third information may further indicate applying the filter to the third layer of the image. For example, the fifth information may further indicate another intensity applying the filter to the third layer of the image. For example, the other intensity applying the filter to the third layer of the image may be larger than the intensity applying the filter to the second layer of the image. For example, a viewing angle of a portion of the third layer of the image not overlapping the second layer of the image displayed on the display panel may be narrower than a viewing angle of the portion of the first layer of the image displayed on the display panel and the second layer of the image displayed on the display panel.

For example, the second layer of the image may be opaque. For example, the image may further include a third layer of the image positioned below the second layer of the image to partially overlap the second layer of the image. For example, the first information may further indicate a position of the third layer of the image. For example, the second information may further indicate a stacking order of the third layer of the image. For example, the third information may further indicate applying the filter to the third layer of the image. For example, the fifth information may further indicate another intensity applying the filter to the third layer of the image. For example, the other intensity applying the filter to the third layer of the image may be smaller than the intensity applying the filter to the second layer of the image. For example, a viewing angle of a portion of the third layer of the image not overlapping the second layer of the image displayed on the display panel may be wider than a viewing angle of the portion of the first layer of the image displayed on the display panel and the second layer of the image displayed on the display panel.

For example, the composition list may include sixth information indicating a radius of curvature of corners of each of the first layer and the second layer of the image.

For example, the first information may indicate the position of each of the first layer and the second layer of the image adjusted by the at least one processor according to difference between a resolution of the image rendered by the at least one processor and a resolution of the display panel.

For example, adjusting the position of each of the first layer and the second layer of the image may be executed through one or more programs comprising instructions included in a kernel driver and/or a hardware abstraction layer (HAL) for a display comprising the display panel and the display driver circuitry.

For example, the display driver circuitry may be configured to determine, in accordance with the identification, performing the pixel processing with respect to the first area of the display panel, the second area of the display panel, and the third area of the display panel.

As described above, an electronic device (e.g., the electronic device 100) may comprise a display panel (e.g., the display panel 160). The display panel may be configured to adjust a viewing angle of an image displayed on the display panel. The electronic device may comprise display driver circuitry (e.g., the display driver circuitry 221). The electronic device may comprise at least one processor (e.g., the at least one processor 210) including processing circuitry. The display driver circuitry may be configured to obtain, from the at least one processor, a composition list regarding layers included in an image to be displayed on the display panel; receive the image from the at least one processor; identify, by using the composition list, applying a filter for user privacy to a second layer positioned below a first layer to partially overlap the first layer, the first layer being transparent or translucent; and in accordance with the identification, display the image, on the display panel, based on performing a pixel processing with respect to pixels corresponding to a portion of the second layer not overlapping the first layer to apply the filter to the portion of the second layer. A viewing angle of a first area of the display panel corresponding to the portion of the second layer not overlapping the first layer may be narrower than a viewing angle of a second area of the display panel corresponding to a remaining portion of the second layer overlapping the first layer and a third area of the display panel corresponding to the portion of the first layer not overlapping the second layer.

For example, the display driver circuitry may be configured to determine, in accordance with the identification, performing the pixel processing with respect to the first area of the display panel among the first area, the second area, and the third area of the display panel.

As described above, an electronic device (e.g., the electronic device 100) may comprise a display (e.g., the display 220) including a display panel (e.g., the display panel 160) including first pixels and second pixels, and display driver circuitry (e.g., the display driver circuitry 221). The first pixels may be viewable based on a first viewing angle. The second pixels may be viewable by a second viewing angle narrower than the first viewing angle. The electronic device may comprise at least one processor (e.g., the at least one processor 210) comprising processing circuitry. The electronic device may comprise memory comprising one or more storage media. The memory may store instructions that cause the electronic device to obtain layer information regarding layers generated for an image to be displayed on the display panel, perform a pixel processing for user privacy with respect to at least one layer among the layers based on the layer information, and display the image by at least partially using the second pixels based on performing the pixel processing with respect to the at least one layer.

For example, the layer information may include first information indicating a position of at least a portion of the layers and second information indicating a stacking order of at least a portion of the layers.

For example, the memory may store instructions that cause the electronic device to obtain third information indicating whether performing the pixel processing with respect to the at least one layer, and perform the pixel processing with respect to the at least one layer based on the third information.

For example, the memory may store instructions that cause the electronic device to provide the layer information to the display driver circuitry by providing the first information, the second information, and the third information to the display driver circuitry using the at least one processor, and perform the pixel processing with respect to the at least one layer by using the display driver circuitry, based on the first information, the second information, and the third information.

For example, the memory may store instructions that cause the electronic device to generate a composition list including the first information, the second information, and the third information by using the at least one processor, generate data for the image by performing layer composition for the layers based on the first information and the second information, provide the composition list and the data to the display driver circuitry by using the at least one processor, and perform the pixel processing with respect to the at least one layer by using the display driver circuitry based on the composition list and the data.

As described above, an electronic device (e.g., the electronic device 100) may comprise a display panel (e.g., the display panel 160). The display panel may be configured to adjust a viewing angle of an image displayed on the display panel. The electronic device may comprise display driver circuitry (e.g., the display driver circuitry 221). The electronic device may comprise at least one processor (e.g., the at least one processor 210) comprising processing circuitry. The electronic device may comprise memory comprising one or more storage media. The memory may store instructions that cause the electronic device to generate, by using the at least one processor, a composition list including first information indicating a position of each of layers generated for an image to be displayed on the display panel, second information indicating a stacking order of each of the layers, and third information indicating whether applying a pixel processing performed on sub-pixel basis for user privacy to each of the layers; provide, by using the at least one processor, the composition list to the display driver circuitry; transmit, to the display driver circuitry, data for the image generated by performing layer composition for the layers according to the first information and the second information in the composition list, by using the at least one processor; identify, by using the display driver circuitry, the layers from the data; in accordance with the third information, identify, by using the display driver circuitry, at least one layer, from among the layers, applying the pixel processing; and display, by using the display driver circuitry, the image on the display panel, based on applying the pixel processing to the at least one layer.

For example, applying the pixel processing to the at least one layer may be performed after performing one or more other pixel processings of adjusting a data voltage provided to at least one other sub-pixel adjacent to a sub-pixel included in the display panel with respect to displaying the image by using the display driver circuitry and/or the at least one processor.

For example, the one or more other pixel processing may comprise performing an upscaling with respect to the image, performing an edge sharpening of at least one visual object included in the image, performing a blur processing with respect to at least a portion of the image, performing a high dynamic range (HDR) processing with respect to at least a portion of the image, performing a temporal dithering with respect to at least a portion of the image, performing a spatial dithering with respect to at least a portion of the image, performing a compensating of gradation with respect to the image, and/or performing a compensating of color temperature with respect to the image.

For example, the display panel may include a plurality of sub-pixels respectively including an organic light emitting diode (OLED). For example, the memory may store instructions that cause the electronic device to adjust, by using the display driver circuitry, a data voltage provided to one or more of the plurality of sub-pixels for a burn-in compensation after applying the pixel processing to the at least one layer.

For example, the composition list may include fourth information indicating an intensity of applying the pixel processing to the at least one layer.

For example, the at least one layer of the image displayed on the display panel may include a first layer to which the pixel processing is applied with a first intensity according to the fourth information, and a second layer to which the pixel processing is applied with a second intensity smaller than the first intensity according to the fourth information and which is positioned on the first layer to partially overlap the first layer.

For example, the at least one layer in the image displayed on the display panel may include a first layer to which the pixel processing is applied with a first intensity according to the fourth information, and a second layer to which the pixel processing is applied with a second intensity greater than the first intensity according to the fourth information and which is positioned on the first layer to partially overlap the first layer.

For example, the composition list may include fifth information indicating a transparency of each of the layers.

For example, the layers may include a first layer and a second layer. For example, the composition list may include the third information indicating not applying the pixel processing to the first layer. For example, the memory may store instructions that cause the electronic device, based on identifying, by using the display driver circuitry, the second layer positioned below the first layer to partially overlap the first layer displayed transparently or translucently according to the fifth information as the at least one layer, to apply, by using the display driver circuitry, the pixel processing to a portion of the first layer overlapping the second layer, and to refrain from applying the pixel processing to another portion of the first layer not overlapping the second layer.

For example, the layers may include a first layer and a second layer. For example, the composition list may include the third information indicating not applying the pixel processing to the first layer. For example, the memory may store instructions that cause the electronic device, based on identifying, by using the display driver circuitry, the second layer positioned below the first layer to partially overlap the first layer displayed transparently or translucently according to the fifth information as the at least one layer, to apply, by using the display driver circuitry, the pixel processing to the first layer, independently of the third information indicating not applying the pixel processing to the first layer.

For example, the composition list may include sixth information indicating a radius of curvature of corners of each of the layers.

For example, the memory may store instructions that cause the electronic device to, after performing the layer composition, adjust, by using the at least one processor, the first information in the composition list according to a resolution of the image lower than a resolution of the display panel, and transmit, by using the at least one processor, the composition list including the adjusted first information, the second information, and the third information to the display driver circuitry.

For example, adjusting the first information may be executed through one or more programs including instructions contained in a kernel driver and/or a hardware abstraction layer (HAL) for a display comprising the display driver circuitry and the display panel.

For example, the memory may store instructions that cause the electronic device to convert, by using the at least one processor, the composition list into a command for the display driver circuitry, and provide the composition list to the display driver circuitry by transmitting the command to the display driver circuitry.

As described above, an electronic device (e.g., the electronic device 100) may comprise a display panel (e.g., the display panel 160). The display panel may be configured to adjust a viewing angle of an image displayed on the display panel. The electronic device may comprise display driver circuitry (e.g., the display driver circuitry 221). The electronic device may comprise the at least one processor (e.g., the at least one processor 210) including processing circuitry. The electronic device may comprise memory comprising one or more storage media. The memory may store instructions that cause the electronic device to generate, by using the first processor, a composition list including first information indicating a position of each of layers generated for an image to be displayed on the display panel, second information indicating a stacking order of each of the layers, and third information indicating whether applying a pixel processing performed on sub-pixel basis for user privacy to each of the layers; perform, by using the first processor, layer composition for the layers according to the first information and the second information in the composition list; provide, by using the first processor, the composition list to the second processor; identify, by using the second processor, at least one layer among the layers to which the pixel processing is applied according to the third information, and apply, by using the second processor, the pixel processing to the at least one layer, in order to generate data for the image; and display, by using the display driver circuitry, the image on the display panel, based on transmitting the data to the display driver circuitry by using the second processor.

For example, applying the pixel processing to the at least one layer may be performed after performing, by using the second processor, one or more other pixel processings that adjust a data voltage provided to at least one other sub-pixel adjacent to a sub-pixel included in the display panel to display the image.

For example, the one or more other pixel processing may comprise performing an upscaling with respect to the image, performing an edge sharpening of at least one visual object included in the image, performing a blur processing with respect to at least a portion of the image, performing a high dynamic range (HDR) processing with respect to at least a portion of the image, performing a temporal dithering with respect to at least a portion of the image, performing a spatial dithering with respect to at least a portion of the image, performing a compensating of gradation with respect to the image, and/or performing a compensating of color temperature with respect to the image.

For example, the plurality of pixels may include a plurality of sub-pixels respectively including an organic light emitting diode (OLED). For example, the memory may store instructions that cause the electronic device to adjust, by using the display driver circuitry, a data voltage provided to one or more of the plurality of sub-pixels for a burn-in compensation after applying the pixel processing to the at least one layer.

For example, the composition list may include fourth information indicating an intensity of applying the pixel processing to the at least one layer.

For example, the at least one layer of the image displayed on the display panel may include a first layer to which the pixel processing is applied with a first intensity according to the fourth information, and a second layer to which the pixel processing is applied with a second intensity smaller than the first intensity according to the fourth information and which is positioned on the first layer to partially overlap the first layer.

For example, the at least one layer in the image displayed on the display panel may include a first layer to which the pixel processing is applied with a first intensity according to the fourth information, and a second layer to which the pixel processing is applied with a second intensity greater than the first intensity according to the fourth information and which is positioned on the first layer to partially overlap the first layer.

For example, the composition list may include fifth information indicating a transparency of each of the layers.

For example, the layers may include a first layer and a second layer. For example, the composition list may include the third information indicating not applying the pixel processing to the first layer. For example, the memory may store instructions that cause the electronic device, based on identifying, by using the second processor, the second layer positioned below the first layer to partially overlap the first layer displayed transparently or translucently according to the fifth information as the at least one layer, to apply, by using the second processor, the pixel processing to a portion of the first layer overlapping the second layer, and to refrain from applying the pixel processing to another portion of the first layer not overlapping the second layer, by using the second processor.

For example, the layers may include a first layer and a second layer. For example, the composition list may include the third information indicating not applying the pixel processing to the first layer. For example, the memory may store instructions that cause the electronic device, based on identifying, by using the second processor, the second layer positioned below the first layer to partially overlap the first layer displayed transparently or translucently according to the fifth information as the at least one layer, to apply, by using the second processor, the pixel processing to the first layer, independently of the third information indicating not applying the pixel processing to the first layer.

For example, the composition list may include sixth information indicating a radius of curvature of corners of each of the layers.

For example, the memory may store instructions that cause the electronic device to, after performing the layer composition, adjust, by using the first processor, the first information in the composition list according to a resolution of the image lower than a resolution of the display panel, and transmit, by using the first processor, the composition list including the adjusted first information, the second information, and the third information to the second processor.

For example, adjusting the first information may be executed through one or more programs including instructions contained in a kernel driver and/or a hardware abstraction layer (HAL) for a display comprising the display driver circuitry and the display panel.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display panel configured to adjust a viewing angle of at least a portion of an image displayed on the display panel;
display driver circuitry; and
at least one processor comprising processing circuitry,
wherein the display driver circuitry is configured to:
obtain, from the at least one processor, a composition list regarding layers included in an image to be displayed on the display panel;
receive, from the at least one processor, the image;
identify, using the composition list, applying a filter for user privacy to a second layer of the image positioned below a first layer of the image to partially overlap the first layer of the image, the first layer of the image being transparent or translucent; and
in accordance with the identification, based on performing a pixel processing with respect to pixels corresponding to the second layer of the image to apply the filter to the second layer of the image and also apply the filter to a portion of the first layer overlapping the second layer of the image, display, on the display panel, the image including the portion of the first layer having a viewing angle narrower than a viewing angle of a remaining portion of the first layer, and the second layer that has a viewing angle narrower than the viewing angle of the remaining portion of the first layer.

2. The electronic device of claim 1, wherein the display driver circuitry is configured to:
further based on refraining from performing the pixel processing with respect to pixels corresponding to the remaining portion of the first layer of the image that does not overlap the second layer of the image, display, on the display, the image.

3. The electronic device of claim 1 or 2, wherein the display driver circuitry is configured to obtain, by receiving a command corresponding to the composition list from the at least one processor, the composition list from the at least one processor, and
wherein receiving the command is synchronized with receiving the image.

4. The electronic device of any one of claims 1 to 3, wherein the pixel processing is performed with respect to the pixels corresponding to the second layer of the image on sub-pixel basis.

5. The electronic device of any one of claims 1 to 4, wherein the display driver circuitry is configured to:
after performing, with respect to displaying the image, one or more other pixel processing that adjusts a data voltage provided to at least another sub-pixel in the display panel adjacent to a sub-pixel in the display panel in conjunction with adjusting a data voltage provided to the sub-pixel in the display panel, perform the pixel processing with respect to the pixels corresponding to the second layer of the image.

6. The electronic device of claim 5, wherein the one or more other pixel processing comprises:
performing an upscaling with respect to the image;
performing an edge sharpening of at least one visual object included in the image;
performing a blur processing with respect to at least a portion of the image;
performing a high dynamic range (HDR) processing with respect to at least a portion of the image;
performing a temporal dithering with respect to at least a portion of the image;
performing a spatial dithering with respect to at least a portion of the image;
performing a compensating of gradation with respect to the image; and/or
performing a compensating of color temperature with respect to the image.

7. The electronic device of any one of claims 1 to 6, wherein each of sub-pixels in the display panel comprises organic light emitting diode (OLED), and
wherein the display driver circuitry is further configured to:
after performing the pixel processing with respect to the pixels corresponding to the second layer of the image, adjust a data voltage to be provided to a portion of the plurality of pixels for a burn-in compensation.

8. The electronic device of any one of claims 1 to 7, wherein the composition list includes:
first information indicating a position of each of the first layer and the second layer of the image;
second information indicating a stacking order of each of the first layer and the second layer of the image;
third information indicating whether applying the filter to each of the first layer and the second layer of the image; and
fourth information indicating transparency of each of the first layer and the second layer of the image, and
wherein the display driver circuitry is configured to:
identify applying the filter to the second layer of the image positioned below the first layer of the image to partially overlap the first layer of the image that is transparent or translucent, based on:
identifying, in accordance with the first information and the second information, the second layer of the image positioned below the first layer of the image to partially overlap the first layer of the image;
identifying, in accordance with the third information, the second layer of the image applying the filter; and
identifying, in accordance with the fourth information, the first layer of the image being transparent or translucent.

9. The electronic device of claim 8, wherein the composition list further includes fifth information indicating an intensity applying the filter to the second layer of the image, and
wherein the display driver circuitry is configured to perform the pixel processing with respect the pixels corresponding to the second layer of the image to apply the filter to the portion of the first layer of the image in the intensity indicated by the fifth information.

10. The electronic device of claim 9, wherein the second layer of the image is opaque,
wherein the image further includes a third layer of the image positioned below the second layer of the image to partially overlap the second layer of the image,
wherein the first information further indicates a position of the third layer of the image,
wherein the second information further indicates a stacking order of the third layer of the image,
wherein the third information further indicates applying the filter to the third layer of the image,
wherein the fifth information further indicates another intensity applying the filter to the third layer of the image,
wherein the other intensity applying the filter to the third layer of the image is larger than the intensity applying the filter to the second layer of the image, and
wherein a viewing angle of a portion of the third layer of the image not overlapping the second layer of the image displayed on the display panel is narrower than a viewing angle of the second layer of the image displayed on the display panel.

11. The electronic device of claim 9, wherein the second layer of the image is opaque,
wherein the image further includes a third layer of the image positioned below the second layer of the image to partially overlap the second layer of the image,
wherein the first information further indicates a position of the third layer of the image,
wherein the second information further indicates a stacking order of the third layer of the image,
wherein the third information further indicates applying the filter to the third layer of the image,
wherein the fifth information further indicates another intensity applying the filter to the third layer of the image,
wherein the other intensity applying the filter to the third layer of the image is smaller than the intensity applying the filter to the second layer of the image, and
wherein a viewing angle of a portion of the third layer of the image not overlapping the second layer of the image displayed on the display panel is wider than a viewing angle of the second layer of the image displayed on the display panel.

12. The electronic device of claim 9, wherein the composition list further includes sixth information indicating a radius of curvature of corners of each of the first layer and the second layer of the image.

13. The electronic device of claim 8, wherein the first information indicates the position of each of the first layer and the second layer of the image adjusted by the at least one processor according to difference between a resolution of the image rendered by the at least one processor and a resolution of the display panel.

14. The electronic device of claim 13, wherein adjusting the position of each of the first layer and the second layer of the image is executed through one or more programs comprising instructions included in a kernel driver and/or a hardware abstraction layer (HAL) for a display comprising the display panel and the display driver circuitry.

15. The electronic device of any one of claims 1 to 14, wherein the display driver circuitry is configured to determine, in accordance with the identification, performing the pixel processing with respect to a first area of the display panel in which the first layer of the image and the second layer of the image overlap each other and a second area of the display panel corresponding to a portion of the second layer of the image not overlapping the first layer of the image.
